# EUROPÄISCHE PATENTSCHRIFT

(11) **EP 3 908 437 B1**
(45) Veröffentlichungstag und Bekanntmachung des Hinweises auf die Patenterteilung: **15.04.2026**
(21) Anmeldenummer: 20712204.5
(22) Anmeldetag: 09.01.2020
(51) Int. Cl.: B27N 3/00, B27N 3/02, B27N 3/18, B27N 3/20, B27N 5/00, B27N 7/00, B29C 33/04, B29C 33/10, B29C 33/46, B29C 43/00, B29C 43/02, B29C 43/04, B29C 43/14, B29C 43/34, B27N 3/04, B27N 3/06, B27N 5/02, B29C 44/18, B29C 33/42, B29C 33/76

(54) **LEICHTBAUPLATTE**
LIGHTWEIGHT BUILDING PANEL
PANNEAU DE CONSTRUCTION LÉGER

(30) Priorität: 11.01.2019 DE 102019100681
(43) Veröffentlichungstag der Anmeldung: 17.11.2021
(73) Patentinhaber: Technische Hochschule Ostwestfalen-Lippe, 32657 Lemgo (DE)
(72) Erfinder: STOSCH, Martin, 50679 Köln (DE); KETTLER, Peter, 59469 Ense (DE)
(74) Vertreter: Michalski Hüttermann & Partner Patentanwälte mbB
(86) Internationale Anmeldenummer: PCT/EP2020/050464
(87) Internationale Veröffentlichungsnummer: WO 2020/144296

(56) Entgegenhaltungen:
- EP-A2- 1 190 825
- EP-A2- 1 190 825
- EP-A2- 2 415 601
- EP-A2- 2 415 601
- WO-A1-2015/104009
- WO-A1-2015/104009
- WO-A1-2015/104009
- WO-A1-2018/115278
- WO-A1-2018/115278
- WO-A1-2018/115278
- JP-A- 2014 124 801
- JP-A- 2014 124 801
- US-A1- 2003 175 486
- US-A1- 2003 175 486
- US-B2- 10 076 852
- US-B2- 10 076 852
- US-B2- 10 076 852

## Beschreibung

Die Erfindung betrifft ein Verfahren zum Herstellen einer Leichtbauplatte nach Anspruch 1.

Leichtbauplatten aus partikelbasierten Werkstoffen, Holzwerkstoffschichten oder Mischformen hieraus sind in breiter Vielfalt bekannt. Insbesondere dreischichtige Sandwichplatten mit zwei Deckseiten und einem gegenüber den Deckseiten leichteren Kern werden heutzutage bereits in vielen Anwendungsbereichen, wie bspw. dem Möbelbau, Fahrzeugbau und Ähnlichem eingesetzt. Ein wesentlicher Grundgedanke der mehrschichtig aufgebauten Leichtbauplatten besteht darin, die Kernschicht gegenüber den Deckschichten möglichst leicht auszugestalten. Hierfür wird die Kernschicht häufig aus einem anderen Material als die Deckseiten ausgebildet. Zudem sind Hohlraumstrukturen, wie bspw. Waben, für die Kernschicht üblich. Eine weitverbreitete Leichtbauplattenart umfasst somit auch Deckschichten aus Holzwerkstoffplatten, wie Faserplatten oder Spanplatten und eine Wabenkernschicht, die bspw. aus Papier besteht.

Eine weitere Leichtbauplatte wird bspw. in der DE 20 2010 005 900 U1 offenbart, die vorschlägt zwei Teilplatten aus partikelförmigen Material herzustellen, die eine ebene Außenoberfläche zur üblichen Verwendung und eine der Außenoberfläche gegenüberliegende Innenoberfläche mit Stützstrukturen aufweist, die mit einer Werkstoffplatte verklebt wird. Dabei weisen die Strukturen eine zur Gesamthöhe der Teilplatte erhebliche Höhe auf, sodass beim Verbinden der Teilplatte mit einer Werkstoffplatte Hohlräume in der Plattenmitte entstehen, wodurch das Gewicht der Gesamtplatte gegenüber einer üblichen Massivplatte deutlich vermindert ist.

WO 2015/104009 A1 beschreibt ein Verfahren zur Verbesserung des Dichteprofils einer Holzwerkstoffplatte, das die Schritte Vorpressen, Heißpressen und Härten umfasst, wobei während des Heißpressschritts ein geometrisches Muster in beide Oberflächen der Holzwerkstoffplatte eingeprägt wird, wobei das geometrische Muster auf einer Oberfläche gegenüber dem geometrischen Muster auf der gegenüberliegenden Oberfläche verschoben ist.

WO 2018/115278 (A1) beschreibt eine Vorrichtung zum Bilden monolithischer Pressholzpaletten mit erhöhter Tragfähigkeit, umfassend: - Speichermittel mit einer Kammer zum Sammeln einer Mischung, in der ein erste Förderband untergebracht ist zum Zuführen einer gleichförmigen Mischungsschicht zum Auslass (104), wobei das erste Band um mindestens eine erste motorisierte Walze gewickelt und von dieser mit der Zuführgeschwindigkeit mitgenommen wird; - Preßmittel (106), die mit einem unteren Formteil und einem oberen Formteil versehen sind, zwischen denen eine Aufnahme zum Bilden einer Palette vorgesehen ist, - ein zweites Förderband, das zwischen den Speichermitteln und Pressmittel angeordnet ist. Die Vorrichtung umfasst Mittel zum Modulieren von mindestens einer der Zuführgeschwindigkeiten, der Vorschubgeschwindigkeit und der Translationsgeschwindigkeit, um ein Einstellen der Menge der auf den/von dem oberen Abschnitt des zweiten Bandes geladenen/entladenen Mischung entlang der Matte zu erhalten.

US 2018/021977 A1 beschreibt eine Faserplatte aus lignocellulosehaltigen Fasern, insbesondere Holzfasern und einem Bindemittel zur Bereitstellung einer Faserplatte, die es ermöglicht, eine hohe Stabilität einerseits und ein vergleichsweise geringes Gewicht andererseits zu vereinen, und welche dennoch mit geringem finanziellen Aufwand hergestellt werden kann.

Zum Herstellen der Stützstrukturen schlägt die DE 20 2010 005 900 U1 vor, dass ein mit Erhebungen versehenes Pressblech oder bei einer kontinuierlichen Presse eine entsprechende Walze mit Erhebungen beim Verpressen der Pressgutmatte Vertiefungen in die Pressgutmatte einbringt, wodurch die Stützstrukturen erzeugt werden. Dabei hat sich jedoch herausgestellt, dass das Einpressen von Stützstrukturen zu großen Ungenauigkeiten in der Stützstrukturhöhe führen kann, so dass das Verbinden der Stützstruktur mit einer Werkstoffplatte oder einer zweiten Teilplatte problematisch ist.

Als Alternative zum Einpressen wird das nachträgliche Einfräsen der Stützstrukturen in die fertig verpresste Pressgutmatte offenbart. Hierdurch kann die Höhe der Stützstruktur und somit die Höhe der Plattenmitte sehr genau hergestellt werden. Allerdings ist ein nachträgliches Einfräsen sehr arbeits- und kostenaufwendig.

Der Erfindung liegt die Aufgabe zugrunde ein Verfahren zum Herstellen von Leichtbauplatten vorzuschlagen, mit dem Teilplatten mit Stützstruktur einfach und kostengünstig hergestellt werden können.

Die Erfindung löst die Aufgabe durch ein Verfahren mit den Merkmalen des Anspruchs 1. Vorteilhafte Weiterbildungen der Erfindung sind in den abhängigen Ansprüchen angegeben.

Das erfindungsgemäße Verfahren zum Herstellen einer beschichteten Leichtbauplatte weist die Schritte auf:
- Erzeugen einer zu einer Teilplatte verpressbaren Pressgutmatte durch die Anordnung von beleimten Partikeln auf einer ersten Pressform, Verpressen der Pressgutmatte in einer Presse zu der Teilplatte mit Stützstrukturen auf einer Plattenoberfläche,
- Verbinden, insbesondere Verkleben der Stützstrukturen mit einer Werkstoffplatte,
- wobei die Pressform Vertiefungen zum Erzeugen von Stützstrukturen auf einer Oberfläche der Teilplatte umfasst und beim Erzeugen der Pressgutmatte ein Teil der Partikel in die Vertiefungen eingebracht wird;
   wobei nach dem Aufbringen der Partikel diese zusätzlich eingewischt, eingekehrt oder auch eingebürstet und/oder über Luftströme in die Vertiefungen befördert werden.

Durch das Einbringen eines Teils der aufgestreuten Partikel in die Vertiefungen der Pressform gelingt es überraschenderweise, sehr gleichmäßige Höhen der Stützstrukturen herzustellen. D.h., die freien Enden der erzeugten Stützstrukturen liegen weitestgehend alle in einer Ebene, was für eine sichere und einfache Verbindung mit der Werkstoffplatte vorteilhaft ist.

Zudem erfolgt die Herstellung der Stützstrukturen gemeinsam mit dem Pressvorgang der Pressgutmatte zu einer Platte, hier einer Teilplatte der Leichtbauplatte, im Weiteren auch Leichtbauplattenhalbschale genannt, wodurch der Herstellungsaufwand gegenüber dem ebenfalls sehr exakten Einfräsen von Stützstrukturen deutlich geringer und kostengünstiger ist, die Stützstrukturen jedoch von gleicher Qualität sind.

Pressgutmatten sind aus der Herstellung von Spanplatten oder Faserplatten bekannt. Zu ihrer Herstellung im Trockenverfahren werden mit einem Klebemittel beleimte Späne oder Fasern auf eine Pressplatte/ein Pressenband beispielsweise aufgestreut oder geworfen. Anschließend wird die so erzeugte Matte aus Spänen oder Fasern in eine Presse eingefahren, wo die locker aufeinanderliegenden Späne oder Fasern unter Druck und ggf. Wärme miteinander verpresst werden. Dabei entweicht die vorhandene Luft aus den Zwischenräumen zwischen den Spänen und Fasern, die Matte wird auf ihre Enddicke komprimiert und das Klebemittel bindet ab, sodass die Späne oder Fasern verklebt werden. Als Klebemittel können die aus der Holzwerkstoffherstellung bekannten Klebemittel, wie beispielsweise Klebemittel auf Basis von Harnstoffharz, Melaminharz und/oder Phenolharz eingesetzt werden.

Unter Partikeln sind im Zusammenhang mit der Erfindung insbesondere organische Partikel, bspw. aus nachwachsenden Rohstoffen wie Holzpflanzen, d. h. beispielsweise Holzfasern, Holzspäne oder Holzstrands zu verstehen. Neben den Partikeln auf Basis von Holzpflanzen werden jedoch auch beispielsweise Partikel aus Einjahrespflanzen, Bambuspartikel, Graspartikel oder allgemeiner cellulosebasierte Partikel, die ebenfalls als Späne oder Fasern vorliegen können, als organische Partikel verstanden. Auch können bspw. aufgeblähte Materialen wie Popcorn als organische Partikel eingesetzt werden. Zudem können auch Kunststoffpartikeln und/oder Metallpartikel oder Mischungen aus organischen Partikeln, Kunststoff- und/oder Metallpartikeln verwendet werden.

Als Presse werden übliche Pressen aus dem Holzwerkstoffbereich verwendet. Dies können abhängig vom Verfahren Taktpressen oder kontinuierliche Pressen, bspw. auch eine Kalander-Presse wie ein Mende-Kalander sein. Dementsprechend kann unter einer ersten Pressform eine Pressplatte für eine Taktpresse, ein Pressenband für eine kontinuierliche Presse, Pressmatrize zum Einlegen in eine Presse oder eine Walze für eine Kalander-Presse verstanden werden.

Die erste Pressform weist Vertiefungen auf. Die Form der Vertiefungen korrespondiert zu der späteren Form der Stützstrukturen. Die Vertiefungen sind somit als Negativform der Stützstrukturen ausgebildet. Im Gegensatz zu den bekannten Prägeblechen, die zum Einprägen von Oberflächenstrukturen in einer Oberflächenbeschichtung ausgebildet sind, ist die erste Pressform zum direkten Kontakt mit den Partikeln vorgesehen. Da die Stützstrukturen letztlich die Mitte der späteren Leichtbauplatte erzeugen und über die Höhe der Stützstrukturen (Strukturgrund bis zum freien Ende) auch die Stärke der späteren Leichtbauplatte maßgeblich beeinflusst wird, sind die Strukturen in der ersten Pressform gegenüber bekannten Prägeblechen deutlich größer. Die fertig gestellten Stützstrukturen ragen vorzugsweise mindestens 2 mm, insbesondere mindestens 2 mm bis 15 mm, vorzugsweise mindestens 2 mm bis 30 mm und besonders bevorzugt mindestens 2 mm bis 45 mm gegenüber einem Grund der Strukturen heraus. Hierzu korrespondierend sind die Vertiefungen in der ersten Pressform ausgebildet.

Sollten Leichtbauplatten eine entsprechende Dicke aufweisen müssen, können die Stützstrukturen selbstverständlich auch noch höher ausgebildet werden. Besonders bevorzugt beträgt bei einer vollständig verpressten Pressgutmatte (Teilplatte) das Verhältnis zwischen der Höhe der Stützstrukturen (ausgehend vom Stützstrukturengrund bis zum freien Ende der Stützstrukturen) und der Dicke der Deckschicht (Außenoberfläche bis zum Stützstrukturengrund) mindestens 1:1, bevorzugt mindestens 1,5:1, besonders bevorzugt mindestens 2:1 und vorteilhafterweise mindestens zwischen 1:1 und 1:4 und besonders vorteilhaft mindestens zwischen 1:1 und 1:10. Dabei weisen die Deckschichten vorzugsweise eine Dicke von mindestens 2 mm, bevorzugt mindestens 2,5 mm, besonders bevorzugt mindestens 3 mm und vorteilhafterweise mindestens zwischen 3 mm bis 10 mm auf.

Das Ausbilden von Stützstrukturen in exakten Höhen von 2 mm bis 45 mm bzw. von Stützstrukturen mit einer noch größeren Höhe wird insbesondere dadurch ermöglicht, dass die Strukturen nicht von oben in einer Pressgutmatte eingepresst werden, sondern erst mit den Partikeln gefüllt werden, bevor ein Verpressen der Pressgutmatte erfolgt.

Neben der gemeinsamen Ebene, die abgesehen von geringen Produktionsabweichungen, von allen freien Enden der Stützstrukturen gebildet wird, sind die Stützstrukturen vorzugsweise auch weitestgehend gleich hoch (freies Ende bis Strukturgrund).

Die Ausbildung der Stützstrukturen kann unterschiedlich erfolgen. So können diese als einzelne Erhebungen ausgebildet sein, die über die Fläche verteilt sind und die beispielsweise einen zylindrischen, pyramidenförmigen oder kegelstumpfförmigen (Vertikal-) Querschnitt aufweisen. Auch können die Strukturen als Stege, die ebenfalls einzeln oder miteinander verbunden sind, ausgebildet sein. Eine weitere bevorzugte Ausführungsform sieht einzelne Erhebungen vor, die über entsprechende Stege miteinander verbunden sind. Die Erhebungen (Stützstrukturen) bilden letztlich zumindest einen Teil der Innenoberfläche einer Teilplatte aus.

Eine besonders bevorzugte Ausführungsform sieht vor, die Erhebungen in einem Raster mit einem Abstand von 32 mm zu erzeugen. D. h., die senkrecht zur Plattenfläche stehenden Mittellängsachsen der Erhebungen sind vorzugsweise rechtwinklig und mit einem Abstand von 32 mm zueinander angeordnet. Bei als Stegen ausgebildeten Erhebungen weisen die Stege vorzugsweise einen Abstand von 32 mm auf, wobei diese insbesondere parallel und/oder orthogonal zueinander angeordnet sind. Hierdurch können insbesondere universell einsetzbare Platten für den Möbelbau hergestellt werden. Für eine kontinuierliche Produktion der Teilplatten bieten sich Stützstrukturen an, die sich in Produktionsrichtung erstrecken, bspw. sich in Produktionsrichtung der Presse erstreckende Stege. Derartige Stege weisen vorteilhafter Weise zudem einen konstanten Querschnitt auf, um die Produktion weiter zu vereinfachen.

Das Auftragen und Einbringen der Partikel in die Vertiefungen erfolgt entweder separat oder gemeinsam mit dem Erzeugen der Streugutmatte. D. h., entweder werden in einem ersten Durchgang weitestgehend nur die Partikel zum Herstellen der Stützstrukturen auf die erste Pressenform und in die Vertiefungen eingebracht und in einem zweiten Durchgang werden weitere Partikel zum Erzeugen der weiteren Streugutmattenschicht (die bspw. auch die äußere Deckschicht bildet) angeordnet.

Alternativ können die Partikel für die Vertiefungen und für die darüber hinausgehende Streugutmattenschicht, die über den Vertiefungen liegt, auch gemeinsam angeordnet werden. Dabei dringt ein Teil der aufgebrachten Partikel ebenfalls in die Vertiefungen ein und füllt diese aus. Der Anteil der Partikel, der nicht in die Vertiefungen eindringt, bildet eine Streugutmattenschicht, die die Vertiefungen überdeckt. Diese wiederum umfasst im verpressten Zustand die Deckschicht der Teilplatte. Die Oberfläche dieser Schicht bildet eine der ersten Pressform gegenüberliegende äußere Oberfläche aus, die beim Verpressen an einer zweiten Pressform anliegt. Die an der ersten Pressform anliegenden Partikel bilden die innere Oberfläche der Teilplatte aus.

Das Herstellen der Streugutmatte, d. h. der Auftrag der in die Vertiefungen eindringenden Partikel und der oberhalb der Vertiefungen angeordneten Partikel erfolgt durch eine übliche Streuvorrichtung oder Wurfvorrichtung.

Um den Befüllungsgrad der Vertiefungen zu erhöhen, kann beispielsweise bei einer als Pressplatte ausgebildeten ersten Pressform eine Rüttelbewegung erfolgen, damit die Schüttdichte in den Vertiefungen erhöht wird. Gemäß der Erfindung ist vorgesehen, dass nach dem Aufbringen der Partikel diese zusätzlich eingewischt, eingekehrt oder auch eingebürstet und/oder über Luftströme in die Vertiefungen befördert werden. Dies erfolgt insbesondere bei einem zweistufigen Streu- und/oder Wurfverfahren, bei dem in einem ersten Durchgang zuerst die Partikel in die Vertiefungen eingebracht werden.

Ergänzend hierzu können noch zusätzliche Verdichtungsvorgänge durchgeführt werden. So können insbesondere die Partikel in den Vertiefungen beispielsweise mittels Druckluft, mittels einer Walze oder mehrerer Walzen oder einer Presse vorverdichtet werden. Dabei können insbesondere die Walze oder die mehreren Walzen, jedoch alternativ auch eine Pressform zum Verdichten der Partikel in den Stützstrukturen auf die Stützstrukturen angepasst sein und entsprechende auf die Vertiefungen angepasste Erhebungen aufweisen. Auch können die Erhebungen gegenüber den Vertiefungen in der ersten Pressform entsprechend kleiner ausgebildet sein, um ein Verdichten, jedoch kein Zerquetschen der Partikel zu bewirken. Insbesondere beim Einsatz von mehreren Walzen/Pressformen ist es bspw. möglich, diese mit unterschiedlichen Strukturhöhen (Erhebungen, die auf die Vertiefungen in der ersten Pressform angepasst sind) auszubilden und nach jedem Verdichtungsvorgang mit einer Walze/Pressform neue Partikel in die Ausnehmungen zu überführen und anschließend mit einer Walze/Pressform, die gegenüber der vorhergehenden Walze/Pressform eine geringere Strukturhöhe aufweist zu verdichten. So können besonders stabile und in ihrer Höhe exakte Stützstrukturen mit einer hohen Partikeldichte erzeugt werden.

Selbstverständlich kann der Auftrag der Partikel in die Vertiefungen bzw. -wie bereits ausgeführt- das Erzeugen der ganzen Streugutmatte auch in mehreren Teildurchgängen erfolgen. Auch kann bspw. nach einer Stützstrukturenkontrolle, bei der ermittelt wird, ob die in den Vertiefungen vorliegenden Partikel eine ausreichende Streudichte aufweisen, damit die später hieraus entstehenden Stützstrukturen ausreichend stabil sind, ein ergänzender Partikelauftrag usw. erfolgen. Eine Stützstrukturenkontrolle und/oder eine Kontrolle der gesamten Streugutmatte kann selbstverständlich auch nach Herstellung der gesamten Streugutmatte erfolgen.

Unabhängig von der Herstellung der Stützstrukturen weisen die aus der DE 20 2010 005 900 U1 bekannten Leichtbauplatten zudem das Problem auf, dass die Stützstrukturen den notwendigen hohen Pressdrücken im Bereich von bspw. 30kg/cm ² bis 60kg/cm² zum Beschichten der Platte mit einer kunstharzbasierten Dekorbeschichtung, wie aus dem Holzwerkstoffbereich bekannt und beispielsweise in Form einer HPL-, CPL-, DPL-Beschichtung, einer Melaminharz Direktbeschichtung oder einer ähnlichen Beschichtung ausgeführt, nicht standhalten, so dass hier nur eingeschränkte Beschichtungen in Form von zumindest weitestgehend drucklos auftragbaren Beschichtungen, beispielsweise Lackbeschichtungen, durchgeführt werden können.

Um eine entsprechende Leichtbauplatte mit einer HPL-, CPL-, DPL-Beschichtung oder einer Ähnlichen mittels Pressdruck aufzubringenden Beschichtung bereitstellen zu können, ist nach einer Weiterbildung der Erfindung das Anordnen einer Oberflächenbeschichtung auf der der ersten Pressform gegenüberliegenden äußeren Oberfläche der Streugutmatte vorgesehen. Das Anordnen der Oberflächenbeschichtung kann vor dem Verpressen der Pressgutmatte in der Presse zu der Teilplatte erfolgen.

Unter der Oberflächenbeschichtung werden in diesem Zusammenhang Oberflächenbeschichtungen verstanden, die mittels Druck und Wärme auf der Oberfläche aufgebracht und mit dieser verbunden werden. Darunter werden insbesondere dekorative Beschichtungen und/oder Schutzbeschichtungen verstanden. Derartige Oberflächenbeschichtungen sind insbesondere als Kunstharzbeschichtungen ausgebildet. So kann es sich beispielsweise um die bereits erwähnten HPL-, DPL- oder CPL-Beschichtungen handeln, bei denen kunstharzgetränkte Papiere, wie Dekorpapier und/oder Overlaypapiere mit der Oberfläche von Holzwerkstoffen, hier der Streugutmatte, verbunden werden. Auch kann eine Melaminharz-Direktbeschichtung als Oberflächenbeschichtung durchgeführt werden.

Die Streugutmatte bildet grundsätzlich zwei Hauptoberflächen. Zum einen die innere Oberfläche, die unter anderem durch die Stützstrukturen gebildet wird und zum anderen die äußere Oberfläche, die durch die Partikel, die der ersten Pressform gegenüberliegen und beim Verpressen an einer zweiten Pressform anliegen, ausgebildet wird.

D. h., die Streugutmatte wird in bekannter Art und Weise zwischen der ersten und zweiten Pressform verpresst. Die zweite Pressform kann entsprechend dem jeweiligen Verfahren entweder als Pressplatte bei einer Taktpresse oder als Pressenband bei einer kontinuierlichen Presse ausgebildet sein. Die zweite Pressform kann insbesondere unstrukturiert ausgebildet sein, so dass die äußere Oberfläche der Pressgutmatte oder der Beschichtung als ebene, glatte Oberfläche ausgebildet wird. Alternativ kann sie beispielsweise auch eine Struktur umfassen, die insbesondere auf der äußeren Oberfläche der Beschichtung ein Strukturdekor ausbildet, wobei unter einem Strukturdekor hier keine Stützstrukturen zu verstehen sind, sondern eine zu einem Farbdekor passende 3D-Haptik mit geringfügigen Vertiefungen und Erhebungen in der Oberfläche, die zumeist unter 1 mm ausgebildet sind. Diese können beispielsweise auch synchron zum Farbdekor (beispielsweise eine Synchronpore) ausgebildet sein.

Nach einer Weiterbildung der Erfindung ist vorgesehen, dass die Pressgutmatte vor dem Verpressen vorverdichtet wird. Hierbei werden die locker aufeinander geschichteten Partikel in der Presse ineinander geschoben, um bereits einen hohen Luftanteil aus den Zwischenräumen zwischen den Partikeln herauszudrücken. Die Pressgutmatte hat nach der Vorverdichtung jedoch noch nicht ihre Enddicke erreicht. Auch ist das Klebemittel auf den Partikeln noch nicht vollständig abgebunden. Dass Vorverdichten erhöht insbesondere die Pressqualität der Teilplatte, da bspw. Platzer beim Verpressen der Pressgutmatte zur Teilplatte verhindert werden.

Grundsätzlich ist es möglich, die Oberflächenbeschichtung bereits vor der Vorverdichtung auf die äußere Oberfläche der Pressgutmatte, d. h. auf die locker aufeinander geschichteten Partikel, aufzulegen und den Pressvorgang der Teilplatte gemeinsam mit der Oberflächenbeschichtung durchzuführen. So kann beispielsweise gemeinsam mit der Oberflächenbeschichtung bereits eine Vorverdichtung und anschließend die Endverdichtung, d. h. der eigentliche Hauptpressvorgang, durchgeführt werden.

Besonders bevorzugt wird die Pressgutmatte jedoch vor dem Anordnen der Oberflächenbeschichtung vorverdichtet. Hierdurch kann eine besonders gute Oberflächenqualität der Oberflächenbeschichtung erreicht werden, da die Oberfläche der Streugutmatte nach dem Vorverdichten bereits weitestgehend eben ausgebildet ist. D. h., die Oberflächenbeschichtung wird auf eine weitestgehend ebene Oberfläche der Streugutmatte aufgelegt. Insbesondere wird durch die Vorverdichtung vor dem Auflegen der Oberflächenbeschichtung auch das Eindringen von Partikeln in die Oberflächenbeschichtung bzw. ein Durchstoßen dieser beim Pressvorgang verhindert.

Nach einer Weiterbildung der Erfindung ist vorgesehen, dass gleichzeitig mit dem Verpressen der Oberflächenbeschichtung die Pressgutmatte vollständig zu einer Teilplatte verpresst wird. Wie bereits oben geschrieben, kann dies entweder ausgehend von der unverdichteten Streugutmatte oder ausgehend von einer vorverdichteten Streugutmatte erfolgen. In jedem Fall liegt die Streugutmatte, unabhängig davon ob vorverdichtet oder nicht, bei dem Pressvorgang, bei dem die Oberflächenbeschichtung mit der Streugutmatte und gleichzeitig die Pressgutmatte zur Teilplatte verpresst wird, auf der ersten Pressform auf. D. h. auch, dass die durch die Partikel gebildeten oder zu bildenden Stützstrukturen weiterhin in den Vertiefungen der ersten Pressform vorliegen.

Alternativ ist nach einer Weiterbildung der Erfindung vorgesehen, dass die Pressgutmatte vor dem Anordnen der Oberflächenbeschichtung vollständig, d. h. zu einer Teilplatte, verpresst wird. Die Oberflächenbeschichtung wird somit auf die vollständig verpresste Teilplatte aufgelegt und die Oberflächenbeschichtung wird in einem zweiten Pressgang mit der äußeren Oberfläche der verpressten Streugutmatte (auch Teilplatte genannt) verpresst. Dabei liegt die vollständig verpresste Pressgutmatte jedoch ebenfalls weiterhin auf der ersten Pressform auf und die jetzt fertig hergestellten Stützstrukturen liegen in den Vertiefungen der ersten Pressform vor.

Nach einer Weiterbildung der Erfindung ist vorgesehen, dass die vollständig verpresste Pressgutmatte (Teilplatte) aus der ersten Pressform entnommen wird und zum Anordnen und Verpressen der Oberflächenbeschichtung wieder auf die erste Pressform aufgelegt, d. h. mit den Stützstrukturen auch in die Vertiefungen, eingelegt wird. Hierdurch wird es bspw. möglich, Teilplatten vor zu produzieren und die Oberflächenbeschichtung individuell, bspw. nach Bedarf und Auftragslage durchzuführen.

Beim Verpressen der Beschichtung, insbesondere der kunstharzbasierten Beschichtung, kann Wasser als Spaltprodukt anfallen. Aufgrund der besonders dünnen Ausbildung der Deckschicht über der Stützstruktur, die bspw. im Bereich von 2,5 mm dick ist, kann das ggf. anfallende Wasser nicht vollständig von der Pressgutmatte, d.h., von den Partikeln aufgenommen werden. Um das Risiko von hierdurch entstehenden Fehlpressungen zu verringern bzw. vollständig zu verhindern, ist nach einer Weiterbildung der Erfindung vorgesehen, dass beim Verpressen der Beschichtung ein Unterdruck an die Pressgutmatte angelegt und beim Aushärten der Beschichtung entstehende Feuchtigkeit abgesaugt wird.

Der Unterdruck wird ausgehend von der ersten Pressform angelegt. Hierfür kann die erste Pressform vorteilhafterweise eine Mikroperforation aufweisen, die bspw. an eine entsprechende Saugvorrichtung angeschlossen ist. Unter einer Mikroperforation werden dabei insbesondere kleine Löcher mit einem Durchmesser zwischen 0,3 mm bis 0,6 mm verstanden. Die Löcher können vorteilhafterweis in einem Raster von 3 mm x 3 mm bis 5 mm x 5 mm angeordnet sein, um einen gleichmäßigen Unterdruck zu erzeugen.

Ein weiteres Problem bei der Entnahme der verpressten Pressgutmatte, Teilplatte oder der Teilplatte mit Beschichtung aus der ersten Pressform kann durch ein Anhaften der erzeugten Stützstrukturen in den Vertiefungen der ersten Pressform entstehen. Insbesondere um die Entnahme zu erleichtern, aber auch bspw. um Beschädigungen an den Stützstrukturen zu verhindern, wird besonders bevorzugt zum Entnehmen der fertiggestellten Pressgutmatte und/oder der Teilplatte aus der ersten Pressform eine Druckbeaufschlagung ausgehend von der ersten Pressform durchgeführt. Die Druckbeaufschlagung erfolgt bspw. ebenfalls durch die oben beschriebene Mikroperforation der ersten Pressform, so dass die angeschlossene Saugvorrichtung auch zum Ausblasen von bspw. Luft ausgebildet ist.

Um das Gewicht der späteren Leichtbauplatte weiter zu reduzieren, ist nach einer Weiterbildung der Erfindung vorgesehen, dass zum Erzeugen der Pressgutmatte eine Schicht von Grobpartikeln angeordnet wird, die insbesondere in die Vertiefungen der ersten Pressform eingebracht werden und anschließend auf die Grobpartikel Feinpartikel mit einem gegenüber den Grobpartikeln geringeren Volumen angeordnet werden. Hierdurch ist es bspw. möglich, den bekannten dreischichtigen Aufbau von Spanplatten weitestgehend nachzuahmen und äußere Oberflächen mit einem hohen Anteil an Feinpartikeln zu erhalten, die entsprechend den gängigen Oberflächenbearbeitungen in der Holzwerkstoffindustrie bevorzugt werden.

Zum Erzeugen einer Leichtbauplatte wird erfindungsgemäß eine Werkstoffplatte mit den Stützstrukturen der Teilplatte verbunden. Die Werkstoffplatte kann beispielsweise als Massivplatte ausgebildet und aus bekannten Werkstoffen, wie beispielsweise Spänen oder Fasern oder anderem, hergestellt sein. So können als Werkstoffplatten übliche Spanplatten, Faserplatten wie HDF, MDF o.ä. verwendet werden. Auch können Werkstoffplatten verwendet werden, die aus anderen Grundmaterialien bestehen, wie beispielsweise Metall, Kunststoff, Kompositprodukten oder Ähnlichem oder auch Werkstoffplatten, die bereits als Leichtbauplatten ausgebildet sind. Besonders bevorzugt ist die Werkstoffplatte jedoch als zweite Teilplatte mit Stützstrukturen und gegebenenfalls einer entsprechenden Oberflächenbeschichtung ausgebildet, wobei insbesondere die Stützstrukturen und dabei insbesondere die freien Enden der Stützstrukturen der beiden Teilplatten miteinander verbunden, insbesondere miteinander verklebt werden. Die dadurch entstehenden Leichtbauplatten haben zwei äußere, sich gegenüberliegende Deckschichten mit Oberflächen, die entsprechend bekannten massiven Holzwerkstoffplatten (insbesondere Spanplatten, Faserplatten, OSB-Platten) ausgebildet sein können und entweder aus dem jeweiligen Partikelmaterial bestehen oder bereits oberflächenbeschichtet sind und einen mittleren Kern haben, der aus zwei miteinander verklebten Stützstrukturen besteht.

Besonders bevorzugt werden die Teilplatten derart miteinander verklebt, dass zwischen den Stützstrukturen zahlreiche Hohlräume entstehen, wodurch das Gesamtgewicht der Leichtbauplatte deutlich reduziert wird. Hierfür können, beispielsweise die äußeren Enden der Stützstrukturen miteinander verbunden werden. D.h., die zweite Teilplatte weist vorzugsweise die gleichen Stützstrukturen auf und/oder kann entsprechend spiegelsymmetrisch zur ersten Teilplatte ausgebildet sein, sodass die jeweiligen freien Enden der Stützstrukturen miteinander verbunden werden können. Insbesondere werden zwei Teilplatten aneinander geklebt, deren Stützstrukturen das bereits beschrieben 32er Raster aufweisen.

Die Teilplatte oder die Teilplatten sind üblicherweise als ebene plattenförmige Bauteile ausgebildet. Aufgrund des Verklebens von zwei Bauteilen (Teilplatte mit Teilplatte oder Teilplatte mit Werkstoffplatte) miteinander um ein zu verwendendes Endprodukt (Platte) zu erhalten, können besonders einfach und vorteilhaft auch Teilplatten bzw. Teilplatten und Werkstoffplatten miteinander zu einem bogenförmigen Bauteil verklebt werden. Hierfür können die Teilplatten und/oder Werkstoffplatten entweder bereits eine Bogenform aufweisen, wenn sie miteinander verklebt werden oder sie werden beim Verkleben gebogen.

Abhängig von der Ausbildung der Stützstrukturen kann dadurch ein Hohlraumnetzwerk im Plattenkern erzeugt werden, das beispielsweise zum Einbringen von Installationsleitungen oder Ähnlichem nutzbar ist. Vorteilhafterweise sind die Stützstrukturen hierfür insbesondere als einzelne, separat voneinander stehende Erhebungen ausgebildet.

Nach einer alternativen Weiterbildung der Erfindung werden die Zwischenräume zwischen den Stützstrukturen mit einem Leichtbauwerkstoff, insbesondere einem Schaum, zumindest abschnittsweise ausgefüllt, wodurch insbesondere die Stabilität der Leichtbauplatte bspw. bei auftretenden Druckkräften senkrecht zur Flächenebene der Leichtbauplatte deutlich verbessert wird. Zudem können Schnittkanten einfacher mit Kantenmaterial beschichtet werden.

Unter einem Leichtbauwerkstoff wird insbesondere ein Werkstoff verstanden, der gegenüber den ggf. organischen Partikeln eine geringere Dichte aufweist. Dabei kann der Leichtbauwerkstoff entweder nachträglich, d. h. nach dem Verkleben der Stützstrukturen mit einer Werkstoffplatte in die Hohlräume eingebracht werden oder er wird nach einer Weiterbildung der Erfindung zum Verkleben der Teilplatte mit der Werkstoffplatte, insbesondere einer zweiten Teilplatte, verwendet. Als Leichtbauwerkstoff können insbesondere Schäume eingesetzt werden.

Weiterhin wird eine Leichtbauplatte mit einer Teilplatte offenbart, die eine Innenoberfläche mit Stützstrukturen aufweist, wobei die Stützstrukturen mit einer Werkstoffplatte verbunden, insbesondere verklebt sind, wobei eine der Innenoberfläche der Teilplatte gegenüberliegende Außenoberfläche der Teilplatte mit einer Oberflächenbeschichtung versehen ist, die mittels Pressdruck und Wärme ausgehärtet und gleichzeitig mit der Außenoberfläche verbunden wurde.

Unter den Oberflächenbeschichtungen werden insbesondere Kunstharz enthaltende Oberflächenbeschichtungen, wie HPL, CPL oder DPL verstanden, die unter Einwirkung von Wärme und Pressdruck aushärten und gleichzeitig mit der Oberfläche der Teilplatte verkleben. Die Oberflächenbeschichtungen sind dabei solche, die mit einem für Kunstharzbeschichtungen üblichen Pressdruck, bspw. im Bereich von 30-60Kg/cm^{2,} und einer Temperatur von 100°C bis 200 °C auf die Oberfläche der Teilplatte gepresst wurden. Oberflächenbeschichtungen, die im Kaltklebeverfahren und zumindest weitestgehend drucklos auf die äußere Oberfläche aufgeklebt werden, sind nicht Teil der Erfindung.

Weiterhin wird eine Pressform zum Verpressen einer Pressgutmatte aus Partikeln zu einer Teilplatte offenbart, wobei die Pressform (auch erste Pressform genannt) Vertiefungen zur Aufnahme von Partikeln aufweist und beim Verpressen mit der Pressform auf einer Oberfläche der Teilplatte eine Stützstruktur aus verpressten Partikeln erzeugt wird.

Besonders bevorzugt weist die Pressform zudem eine Mikroperforation auf, die dazu ausgebildet ist, einen Unterdruck an der auf der Pressform aufliegenden Pressgutmatte anzulegen und/oder Luft zur Entnahme der verpressten Pressgutmatte an die Pressgutmatte zu blasen. An der Pressform ist somit eine Saug- und/oder Blasvorrichtung anschließbar, die durch die Mikroperforation die in der Pressgutmatte vorliegende Luft und die in der Luft vorliegenden Bestandteile, wie bspw. Feuchtigkeit aus der Pressgutmatte oder Feuchtigkeit, die beim Aushärten einer auf der Pressgutmatte aufliegenden Oberflächenbeschichtung aus Kunstharz anfällt, absaugen kann bzw. Luft (bzw. ein gasförmiges Medium) gegen die verpresste Pressgutmatte bläst, beispielsweise um die Entnahme der Pressgutmatte aus der Pressform zu erleichtern.

Weiterhin wird ein Verfahren zum Herstellen von Teilplatten für eine Leichtbauplatte offenbart.

Das Verfahren weist die Schritte auf: Erzeugen einer zu einer Teilplatte verpressbaren ersten Pressgutmatte durch die Anordnung von beleimten Partikeln auf einer Unterlage, Anordnen einer Pressmatrize auf der ersten Pressgutmatte, Erzeugen einer zu einer Teilplatte verpressbaren zweiten Pressgutmatte durch die Anordnung von beleimten Partikeln auf der Pressmatrize, Verpressen der Pressgutmatten in einer Presse zu zwei Teilplatten, wobei die Pressmatrize auf zwei gegenüberliegenden Matrizenseiten Vertiefungen umfasst, ein Teil der Partikel in die Vertiefungen eingebracht wird und mit dem Verpressen der Teilplatten Stützstrukturen aus verpressten Partikeln an jeder der an die Matrizenseiten angrenzenden Seiten (Oberflächen) der Teilplatten erzeugt werden.

Die Pressmatrize entspricht weitestgehend der vorgenannten Pressform, unterscheidet sich jedoch dahingehend, dass sie nicht als Pressblech oder Pressband der Presse, sondern als Mittelmatrize ausgebildet ist, die zwischen zwei Pressgutmatten angeordnet wird. Sie ermöglicht die gleichzeitige Herstellung von zwei Teilplatte mit Stützstrukturen zum Herstellen von Leichtbauplatten.

Die Unterlage kann bspw. als Pressblech oder Pressband ausgebildet sein und weist vorzugsweise eine ebene und unstrukturierte Oberfläche auf. Die Stützstrukturen sind, wie oben ausgeführt Erhebungen, die sich bspw. aus einer Deckschicht der Teilplatte erstrecken.

Für die weitere Beschreibung der Merkmale wird auf die vorherigen Ausführungen zum Verfahren zum Herstellen einer Leichtbauplatte, auf die Ausführungen zur Leichtbauplatte und zur Pressform und auf die Nachfolgenden Ausführungen verwiesen.

Um das Einbringen der Partikel in die Vertiefungen der Pressmatrize zu verbessern ist nach einer Weiterbildung der Erfindung vorgesehen, dass die Pressmatrize nach dem Anordnen auf der ersten Pressgutmatte und/oder nach dem Erzeugen der zweiten Pressgutmatte, in Schwingung gebracht wird, so dass die Partikel der ersten Pressgutmatte und/oder der zweiten Pressgutmatte in die angrenzenden Vertiefungen der Pressmatrize eindringen.

Die Erzeugung von Schwingungen kann in einem Arbeitsgang, d.h. nach dem Auftrag der Partikel der zweiten Pressgutmatte oder auch in zwei Arbeitsgängen, d.h. sowohl nach dem Anordnen der Pressmatrize auf der ersten Pressgutmatte als auch während des Anordnens und/oder nach dem Erzeugen der zweiten Pressgutmatte erfolgen. Zum Erzeugen der Schwingen wird die Pressmatrize insbesondere in Richtung ihrer Ebene (X-Y-Richtung) bewegt, wodurch die Partikel der ersten Pressgutmatte sich auftürmend in die Vertiefungen bewegen und die Partikel der zweiten Pressgutmatte in die Vertiefungen hinein rutschen.

Nach einer Weiterbildung der Erfindung ist vorgesehen, dass die den Stützstrukturen gegenüberliegenden Außenoberflächen der Teilplatte beschichtet werden, wobei die Pressmatrize beim Beschichten zwischen den Teilplatten angeordnet ist. Durch die Anordnung der Teilplatten in der Pressmatrize werden diese mechanisch stabilisiert, so dass das Sandwich aus Teilplatten und Pressmatrize entsprechend üblichen massiven Holzwerkstoffplatten weiter bearbeitet werden kann. So kann das Sandwich aus Teilplatten und mittig angeordneter Pressmatrize beispielsweise mit einer flüssig auf die Außenoberflächen aufzutragenden Oberflächenbeschichtung behandelt werden. Auch ist es möglich, die Außenoberflächen mit bahnförmigen oder blattförmigen Beschichtungsmaterialien, wie Folien oder kunstharzgetränkten Trägern, wie Papieren, die unter Druck und Wärme in einer Presse ausgehärtet werden, zu Beschichten. Für die Beschichtung kann die in der Presse erzeugten Sandwiches direkt verwendet werden, ohne die Teilplatten vorher von der Pressmatrizen zu entfernen. Alternativ ist es auch möglich, die Teilplatten zuerst von der Pressmatrizen zu entfernen, beispielsweise zu bearbeiten, und für die nachfolgende Oberflächenbeschichtung wieder in die Pressmatrizen einzulegen. Die Außenoberflächen sind üblicherweise beim Pressvorgang den jeweiligen Pressbändern oder Pressplatten Presse zugewandt und liegen somit den Stützstrukturen der jeweiligen Teilplatte gegenüber. Die Außenoberflächen sind üblicherweise eben und strukturlos ausgebildet.

Neben der Möglichkeit einer einfachen Oberflächenbeschichtung kann das Sandwich aus Teilplatten und Pressmatrize entsprechend einer üblichen massiven Holzwerkstoffplatte behandelt werden. So kann das Sandwich auf übliche Weise aus der Presse entnommen und beispielsweise in einem Sternwender abgekühlt werden. Auch kann das erzeugte Sandwich oder der erzeugte Sandwichstrang (bei kontinuierlicher Herstellungsweise) in kleinere Bauteile zerlegt werden, wobei das Sandwich dabei erhalten bleibt und entweder die Pressmatrize mit aufgeschnitten wird oder die Trennschnitte jeweils zwischen zwei Pressmatrizen gelegt werden. Auch eine Bearbeitung der den Stützstrukturen gegenüberliegenden Außenoberfläche, wie beispielsweise das Reinigen oder Schleifen der Außenoberfläche, ist mit den in der Pressmatrize vorhandenen Teilplatten besonders einfach möglich.

Alternativ oder ergänzend zum Beschichten der Außenoberflächen nach dem Verpressen kann auch eine direkte Beschichtung beim Verpressen durchgeführt werden. Hierfür ist nach einer Weiterbildung der Erfindung vorgesehen, dass die erste Pressgutmatte auf einer ersten Oberflächenbeschichtung erzeugt wird und auf der zweiten Pressgutmatte eine zweite Oberflächenbeschichtung angeordnet wird, wobei beide Oberflächenbeschichtungen beim Verpressen der Pressgutmatten mit den den Stützstrukturen gegenüberliegen Außenseiten der entstehenden Teilplatten verbunden werden. Beim direkten Beschichten werden vorrangig blattförmige oder bahnförmige Oberflächenbeschichtungen eingesetzt. Insbesondere werden kunstharzgetränkte Trägersysteme, wie kunstharzgetränkte Papiere oder Folien verwendet. Kunstharzgetränkte Oberflächenbeschichtungen sind beim Aufbringen der ersten Pressgutmatte bzw. beim Auflegen auf die zweite Pressgutmatte üblicherweise vorgetrocknet, jedoch noch nicht vollständig ausgehärtet, so dass der beim Verpressen der Teilplatten eingesetzte Pressdruck und die Wärme gleichzeitig das eingesetzte Kunstharz im Trägersysteme vollständig aushärten. Dementsprechend sind die erste und die zweite Oberflächenbeschichtung insbesondere gleichartig, wobei sie beispielsweise bei einem aufzeigenden Dekor Unterschiede aufweisen können.

Gerade bei dem Einsatz von organischen Partikeln, beispielsweise Holzpartikeln wie Fasern oder Spänen und aufgrund des auf die Partikel aufgetragenen Leims (Klebemittel) treten beim Verpressen hohe Mengen an Feuchtigkeit auf, die in Form von Wasserdampf entweichen müssen. Um Dampfplatzer beim Verpressen so weit wie möglich zu vermeiden, ist nach einer Weiterbildung der Erfindung vorgesehen, dass beim Verpressen der ersten und zweiten Pressgutmatten auftretender Wasserdampf durch die Pressmatrize hindurchgeleitet wird. Der Wasserdampf wird dabei von der ersten Pressgutmatte zur zweiten Pressgutmatte und umgekehrt geleitet. Hierdurch findet eine vorteilhafte gleichmäßige Verteilung des auftretenden Wasserdampfes über das gesamte Pressgut (Pressgutmatten bzw. Teilplatten und Pressmatrize) statt. Da gerade bei einer gleichzeitig erfolgenden Direktbeschichtung mittels eines kunstharzgetränkten Trägersystems zusätzlich Feuchtigkeit ins Pressgut eingetragen wird, ist das Hindurchleiten des Wasserdampfes bei einer Direktbeschichtung besonders vorteilhaft.

Um das Hindurchleiten zu ermöglichen, ist die Pressmatrize beispielsweise aus einem porösen Material ausgebildet, wobei die Poren entsprechend klein sein müssen, um ein Eindringen der Partikel zu verhindern und in ausreichender Anzahl vorhanden sein müssen, um eine schnelle und gleichmäßige Verteilung des auftretenden Wasserdampfes zu ermöglichen. Vorzugsweise wird daher eine Pressmatrize verwendet, die eine hergestellte Mikroperforierung aufweist. Insbesondere befinden sich die Mikroperforierungen dabei in allen Abschnitten der Pressmatrize, also sowohl in Bereichen mit Vertiefungen als auch in den normalen Abschnitten der Pressmatrize ohne Vertiefungen.

Nach einer Weiterbildung der Erfindung ist vorgesehen, dass an die Pressmatrize ein Unterdruck, insbesondere zum Ansaugen der Partikel und/oder zum Absaugen von Wasserdampf beim Pressen, angelegt wird und/oder an die Pressmatrize ein Überdruck für eine einfache Entnahme der Teilplatten aus der Pressmatrize angelegt wird. Für diese Weiterbildung ist die Pressmatrize durchlässig für ein Gas, insbesondere luftdurchlässig ausgebildet, so dass der Unterdruck oder der Überdruck an den Teilplatten wirken kann. Die Pressmatrize kann beispielsweise mikroperforiert sein. Zudem kann die Pressmatrize beispielsweise entsprechende Kanäle aufweisen, die die Übertragung des Unterdrucks bzw. Überdrucks an die Matrizenseiten der Pressmatrize bzw. an die mit Stützstrukturen versehene Oberfläche (Innenoberflächen) der Teilplatten übertragen. So können diese Kanäle beispielsweise mit den Mikroperforationen in Verbindung stehen und diese gegebenenfalls ergänzen.

Unter einem Überdruck wird dabei ein Gasdruck, beispielsweise ein Luftdruck verstanden, der über dem atmosphärischen Druck liegt. Dementsprechend wird unter einem Unterdruck ein Gasdruck verstanden, der unter dem atmosphärischen Druck liegt. Unter Überdruck und Unterdruck werden insbesondere Drücke verstanden, die im Bereich von 1,25 bar und größer oder 0,75 bar und kleiner liegen.

Über den Einsatz von Unterdruck kann beispielsweise ein besseres Einbringen der Partikel in die Vertiefungen bewirkt werden. Hierfür weisen speziell die Vertiefungen entsprechende Mikroperforationen auf, so dass die Partikel mittels des Unterdrucks in die Vertiefungen eingesaugt werden. Hierfür kann der Unterdruck beispielsweise nach dem Erzeugen der zweiten Teilplatte, beispielsweise auch beim Erzeugen der Schwingungen der Pressmatrize, angelegt werden.

Zudem kann der Unterdruck für einen besseren Abtransport des beim Verpressen auftretenden Wasserdampfs eingesetzt werden. Dabei wird der Wasserdampf mittels des Unterdrucks über die Mikroperforationen und beispielsweise die weiteren Kanäle aus der Pressmatrize herausgesaugt.

Gerade aufgrund der Vertiefungen kann es beim Herausnehmen der Teilplatten aus der Pressmatrize beispielsweise aufgrund von Haftkräften zu Schwierigkeiten kommen. Der auf die Teilplatten wirkende Überdruck bewirkt dabei, dass die Teilplatten besonders einfach aus der Pressmatrize herausgenommen werden können.

Damit die mit einer Pressmatrize zu erzeugenden Teilplatten so ähnlich wie möglich ausgebildet sind, ist es notwendig, die Pressmatrize präzise zwischen den beiden Teilplatten zu positionieren und auch beim Verpressen zu gewährleisten, dass die Pressmatrize in ihrer Position verbleibt. Nach einer Weiterbildung der Erfindung ist daher vorgesehen, dass die Pressmatrize mittels Rollen-, Gleiter- oder Kettenführung zwischen den beiden Pressgutmatten positioniert wird und/oder die Pressmatrize an mindestens einer Pressfläche der Presse abgestützt wird. Dabei sind die Rollen-, Gleiter- oder Kettenführungen bspw. dazu ausgebildet, die Pressmatrize zwischen den beiden Pressgutmatten zu positionieren, gegebenenfalls auch diese in Schwingung zu versetzen und/oder diese beim Verpressen der Teilplatten in Position zu halten. Insbesondere für die Positionierung der Pressmatrize beim Verpressen kann zudem alternativ oder ergänzend eine Stützvorrichtung zum Abstützen der Pressmatrizen an den Pressblechen/Pressbändern der Presse vorgesehen sein.

Um aus den hergestellten Teilplatten eine Leichtbauplatte zu erzeugen ist nach einer Weiterbildung der Erfindung vorgesehen, dass eine fertige Teilplatte an den Stützstrukturen mit einer weiteren Werkstoffplatte, insbesondere einer Teilplatte zu einer Leichtbauplatte verbunden wird. D. h., dass jede der Teilplatten mit einer weiteren Teilplatte verbunden werden kann, wobei in diesem Fall die jeweiligen Stützstrukturen korrespondierend zueinander ausgebildet sein sollten, damit die beiden Teilplatten jeweils an den Stützstrukturen miteinander verbunden werden können. Auch ist es möglich, jede der Teilplatten mit einer anderen Werkstoffplatte, beispielsweise einer massiven Platte, wie einer Holzwerkstoffplatte, Faserplatte oder Spanplatte zu verbindenden, sodass die Stützstrukturen der Teilplatte mit einer Oberfläche der jeweiligen Werkstoffplatte verbunden werden. Unter dem Verbinden der Stützstrukturen mit einer Werkstoffplatte wird insbesondere ein Verkleben der Stützstrukturen mit der jeweiligen Oberfläche der Werkstoffplatte bzw. den Stützstrukturen einer zweiten Teilplatte verstanden. Zum Verbinden der Stützstrukturen von mindestens einer Teilplatte ist es notwendig, diese vorher aus der Pressmatrize zu entnehmen. Dabei kann die Teilplatte bereits beschichtet, beispielsweise direkt beschichtet sein.

Alternativ zur Entnahme und Verbindung der Teilplatte mit einer Werkstoffplatte können auch die beiden mit einer Pressmatrize erzeugten Teilplatten direkt beim Verpressen verbunden werden. Hierzu ist nach einer Weiterbildung der Erfindung vorgesehen, dass die Vertiefungen die Pressmatrize durchragen und die in die Vertiefungen eingebrachten Partikel der ersten Pressgutmatte mit den Partikeln der zweiten Pressgutmatte und/oder die in die Vertiefungen eingebrachten Partikel der zweiten Pressgutmatte mit den Partikeln der ersten Pressgutmatte in Kontakt kommen und beim Verpressen miteinander verbunden werden.

Dabei entstehen zwei Teilplatten, die bereits beim Verpressen fest miteinander und nicht zerstörungsfrei voneinander lösbar verbunden sind. D. h., die Pressmatrize kann nicht einfach entnommen werden, sondern verbleibt beispielsweise zwischen den beiden Teilplatten.

Die Vertiefungen sind bei dieser Ausführungsform als Löcher oder Durchbrüche durch die Pressmatrize zu verstehen, die im Querschnitt groß genug sind, um ein Durchdringen der Partikel zu ermöglichen. Dementsprechend sind beispielsweise dampfdurchlässige Mikroperforationen in der Pressmatrize nicht als Löcher oder Durchbrüche zu verstehen.

Neben dem Verbleib der Pressmatrize zwischen den Teilplatten wäre es bei dieser Ausführungsform beispielsweise auch möglich, die Pressmatrize mit einer alternativen Methode zwischen den beiden Teilplatten zu entfernen. So kann beispielsweise bei einer entsprechenden Ausbildung der Pressmatrize diese nachträglich aufgelöst werden oder verkleinert/zerkleinert werden, sodass sie zwischen den Teilplatten herausnehmbar ist.

Insbesondere bei einer zwischen den Teilplatten verbleibenden Pressmatrize ist es vorteilhaft, wenn die Pressmatrize eine geringere Dichte gegenüber den Teilplatten aufweist, damit weiterhin eine Leichtbauplatte entsteht. Besonders bevorzugt kann daher als Pressmatrize eine druckfeste Schaumfolie oder eine druckfeste Luftpolsterfolie eingesetzt werden. Eine druckfeste Schaumfolie oder auch eine druckfeste Luftpolsterfolie können zu dem derart ausgebildet werden, dass diese entsprechend den beiden oben beschriebenen alternativen Methoden zwischen zwei fest miteinander verbundenen Teilplatten durch ein Auflösen oder Verkleinern entfernt werden könnten. Selbstverständlich sind druckfeste Schaumfolien oder druckfeste Luftpolsterfolien als Pressmatrizen auch einsetzbar, wenn nicht miteinander verbundene Teilplatten erzeugt werden.

Die druckfeste Schaumfolie wird unabhängig davon, ob sie mit normalen Vertiefungen oder mit durchragenden Vertiefung ausgestattet wird, vorzugsweise Inline hergestellt, d. h. die Vertiefungen werden direkt im Herstellungsprozess der Teilplatten in die Schaumfolie eingebracht. Hierfür kann beispielsweise eine entsprechende Präge- und/oder Stanzvorrichtung, bspw. eine entsprechende Walze, eingesetzt werden. So ist es beispielsweise möglich, die Schaumfolie als rollenförmige oder plattenförmige Ware bereitzustellen, diese mit der entsprechenden Prägewalze oder Stanzwalze mit Vertiefungen oder Durchbrüchen zu versehen und dann direkt im Herstellungsprozess der Teilplatten auf die erste Pressgutmatte aufzubringen. Selbstverständlich können auch bereits vorbereitete als Pressmatrizen ausgebildete Schaumfolien oder Luftpolsterfolien eingesetzt werden.

Weiterhin wird eine Pressmatrize zum Herstellen von Teilplatten für Leichtbauplatten mit zwei gegenüberliegenden Matrizenseiten zum jeweiligen Anordnen einer Pressgutmatte aus beleimten Partikeln offenbart, wobei jede Matrizenseite Vertiefungen zur Aufnahme der beleimten Partikeln aufweist und die Vertiefungen zum Formen von Stützstrukturen aus den beleimten Partikeln ausgebildet sind.

Die Pressmatrize ist somit als Mittelmatrize ausgebildet, die zwischen zwei Pressgutmatten angeordnet wird. Sie weist zwei gegenüberliegende Oberflächen (Matrizenseiten) auf, in die Vertiefungen eingebracht sind, die sich ausgehend von einer Matrizenseite insbesondere in Richtung zur gegenüberliegenden Matrizenseite erstrecken. Jede Oberfläche bildet dabei vorzugsweise eine Ebene aus, in die Vertiefungen jedoch keine sich über die Ebene ragende Erhebungen vorliegen. Die Pressmatrize kann beispielsweise aus einem Werkstück, wie einer Platte, ausgefräst werden. Die Pressmatrize ist insbesondere aus einem druckfesten Material ausgebildet. Sie kann beispielsweise aus einem Metall oder auch einem entsprechend druckfesten Kunststoff ausgebildet sein. Auch kann die Prägematrize bspw. aus einem druckfesten Schaum oder einer druckfesten Luftpolsterfolie ausgebildet sein. Die Höhe (Tiefe) der Vertiefungen beträgt bspw. 5 mm bis 9 mm ausgehend von der eine Ebene bildenden Oberfläche der Pressmatrize.

Im Weiteren wird bezüglich der Merkmale der Pressmatrize bzw. der Vertiefungen noch einmal ausdrücklich auf die vorgenannten Ausführungen zur Pressmatrize, der Beschreibungen der Pressform und den Vertiefungen in der Pressform verwiesen.

Wie bereits zum Verfahren ausgeführt, fällt beim Verpressen und gerade bei der Verwendung von organischen Partikeln und dem verwendeten Leim eine große Menge an Feuchtigkeit an, die in Form von Wasserdampf entweichen muss. Dementsprechend ist nach einer Weiterbildung der Erfindung vorgesehen, dass die Pressmatrize dampfdurchlässig zwischen den gegenüberliegenden Matrizenseiten ausgebildet ist. Hierdurch wird gewährleistet, dass der entstehende Wasserdampf sich gleichmäßig über das Pressgut, d. h. über beide Teilplatten/Pressgutmatten und die Pressmatrize verteilen kann, wodurch Dampfplatzer beim Verpressen verhindert werden. Um eine entsprechende Durchlässigkeit der Pressmatrize zu erreichen, kann diese aus entsprechend geeigneten (bspw. porösem) Kunststoffen oder auch entsprechenden druckfesten Schäumen oder Ähnlichem ausgebildet sein. Auch kann die Pressmatrize beispielsweise aus Kunstharz bestehen oder als Sandwich-Produkt ausgebildet sein. Zur Herstellung der Pressmatrize können insbesondere auch kunstharzgetränkte Trägersysteme eingesetzt werden. Besonders bevorzugt weist die Pressmatrize Mikroperforationen zum Durchleiten von Wasserdampf zwischen den gegenüberliegenden Matrizenseiten auf. Die Mikroperforationen sind dabei derart ausgebildet, dass sie die beiden Matrizenseiten miteinander verbinden. Die Perforationslöcher weisen dabei eine Größe auf, die groß genug ist, um eine ausreichende Menge an Wasserdampf durchzuleiten und entsprechend klein, um das Eindringen von Partikeln, insbesondere Fasern oder Spänen, zu verhindern.

Eine Möglichkeit zur Herstellung der Leichtbauplatten besteht darin, die jeweiligen Teilplatten jeweils mit ihren Stützstrukturen aneinander zu verbinden. Hierfür ist es jedoch notwendig, dass die Stützstrukturen der beiden zu verbindenden Teilplatten positionsgleich angeordnet sind. Dementsprechend ist die Pressmatrize besonders bevorzugt derart ausgebildet, dass die Vertiefungen auf einer ersten Matrizenseite korrespondierend zu den Vertiefungen auf einer der ersten Matrizenseite gegenüberliegende zweiten Matrizenseite angeordnet sind, so dass zwei mit der Pressmatrize hergestellte Teilplatten jeweils an den erzeugten Stützstrukturen verbunden werden können.

Hierfür sind die Vertiefungen auf der ersten Matrizenseite vorzugsweise spiegelsymmetrisch zu den Vertiefungen auf der zweiten Matrizenseite angeordnet. Selbst verständlich kann beispielsweise bei einer symmetrischen Anordnung der Vertiefungen auf einer der Matrizenseiten dadurch die zweite Matrizenseite identisch zur ersten Matrizenseite ausgebildet sein.

Bei Pressmatrizen, deren Gesamtstärke größer ist als die Summe der jeweils tiefsten Vertiefungen auf den beiden Matrizenseiten, ist die Anordnung der Matrizenseite zueinander unerheblich. Hier können beispielsweise die Vertiefungen der ersten Matrizenseite deckungsgenau gegenüberliegend den Vertiefungen in der zweiten Matrizenseite angeordnet sein. Insbesondere bei Pressmatrizen, deren Gesamtstärke kleiner ist als die Summe aus der tiefsten Vertiefung der ersten Matrizenseite und der tiefsten Vertiefung der zweiten Matrizenseite ist nach einer Weiterbildung der Erfindung vorgesehen, dass korrespondierende Vertiefungen auf der zweiten Matrizenseite in Richtung einer X-Achse und/oder Y-Achse gegenüber den Vertiefungen auf der ersten Matrizenseite versetzt sind, so dass sich korrespondierende Vertiefungen in der zweiten Matrizenseite in Bereiche der ersten Matrizenseite erstrecken, in denen keine Vertiefungen angeordnet sind.

D. h., dass die Vertiefungen der ersten und der zweiten Matrizenseite nicht deckungsgleich an gegenüberliegenden Seiten angeordnet sind, sondern dass die Vertiefungen an einer Matrizenseite in Richtung der Längsachse und/oder oder Querachse (X-Y-Achsen) der Pressmatrize versetzt angeordnet sind. Die Anordnung der Vertiefungen zueinander auf der ersten Matrizenseite erfolgt jedoch weiterhin korrespondierend zu der Anordnung der Vertiefungen zueinander auf der zweiten Matrizenseite.

Für eine besonders einfache Weiterverarbeitung der jeweiligen Teilplatten ist nach einer Weiterbildung der Erfindung vorgesehen, dass die Pressmatrize zwei separate Pressschalen umfasst, wobei jede Pressschale eine der Matrizenseiten aufweist und die Pressschalen an den den Matrizenseiten gegenüberliegenden Oberflächen aneinander angeordnet sind. Die beiden Pressschalen sind dabei insbesondere lösbar miteinander verbunden, sodass nach dem Verpressen der Pressgutmatten die beiden Pressschalen voneinander getrennt werden können und jeweils eine Teilplatte mit einer Presseschale für eine Weiterverarbeitung der Teilplatte vorliegt. Die Ausbildung der Pressmatrize aus zwei Pressschalen vereinfacht zudem die Herstellung der Pressmatrize erheblich. So ist es beispielsweise möglich, bei der Beschädigung einer Matrizenseite nur eine Pressschale entsprechend auszutauschen anstatt die gesamte Pressmatrize neu ausführen zu müssen. Zudem wird auch die Entformung der Teilplatten von den Matrizenseiten deutlich vereinfacht.

Nach einer Weiterbildung der Erfindung ist vorgesehen, dass jede Pressschale eine von der jeweiligen Matrizenseiten ausgehende, in die Pressschale führende Mikroperforation aufweist, wobei mindestens eine der Pressschalen einen Kanal umfasst, der zumindest im zusammengesetzten Zustand der Pressschalen in Verbindung mit den Mikroperforation der beiden Matrizenseiten steht und ein Anlegen eines Unterdrucks an die Matrizenseiten zum Ansaugen von Wasserdampf aus den Pressgutmatten und/oder zum Ansaugen von Partikeln in die Vertiefungen und/oder ein Beaufschlagen der Matrizenseiten mit einem Druckmedium zur leichteren Entnahme der Teilplatten aus den Pressschalen ermöglicht.

Die Pressschalen erleichtern zudem erheblich die Herstellung einer Pressmatrize, die zum Anlegen eines Unterdrucks bzw. zum Anlegen eines Überdrucks ausgebildet ist. Der die Mikroperforationen verbindende Kanal (bzw. ein Kanalsystem) kann in eine oder beide Pressschalen eingebracht sein. Der Kanal ist vorzugsweise und zumindest abschnittsweise in die Seite der Pressschale eingebracht, die der Matrizenseite mit den Vertiefungen gegenüberliegt.

Obwohl manche Aspekte im Zusammenhang mit einer der Vorrichtungen oder einem der Verfahren beschrieben wurden, versteht es sich, dass diese Aspekte auch eine Beschreibung des Weiteren Verfahrens oder der weiteren Vorrichtungen darstellen und umgekehrt. Auch können im Zusammenhang mit den Vorrichtungen beschrieben Aspekte als Verfahrensschritte des ersten und/oder zweiten Verfahrens verstanden werden. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

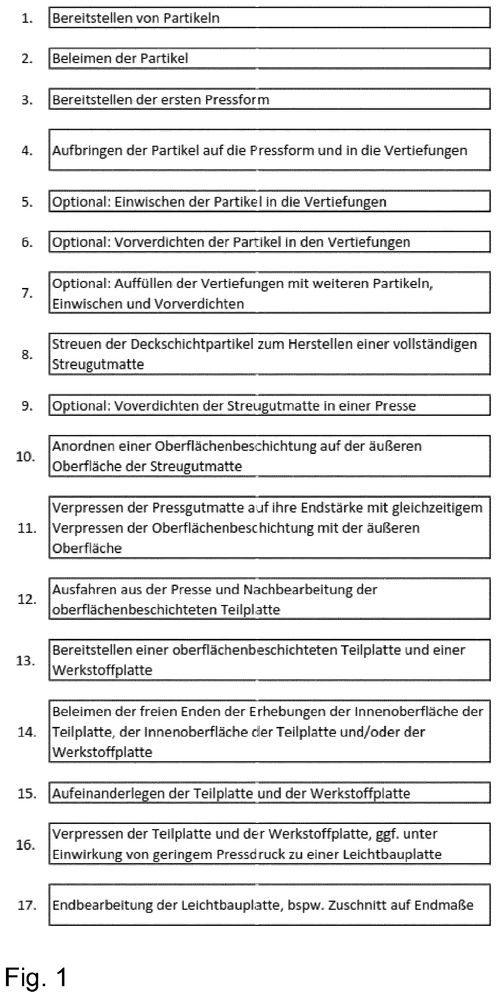

Weiter wird die Erfindung anhand mehrerer Ausführungsbeispiele näher erläutert: Es zeigen
- Figur 1: schematisch in einem Ablaufdiagramm die einzelnen Verfahrensschritte zum Herstellen einer Teilplatte und einer Leichtbauplatte aus einer Teilplatte und einer Werkstoffplatte;
- Figur 2a bis 2c: schematisch in Querschnitten Pressmatrizen unterschiedlicher Stärke mit Teilplatten;
- Figur 3: schematisch in einem Querschnitt zwei zu einer Leichtbauplatte zusammengesetzte Teilplatten aus den Figuren 2a bis 2c;
- Figur 4a: schematisch in einer Ansicht eine erste Matrizenseiten mit Vertiefungen;
- Figur 4b: schematisch in einer Ansicht eine zweite Matrizenseite mit zu den Vertiefungen der ersten Matrizenseite aus Figur 4a korrespondierenden Vertiefungen;
- Figur 4c: schematisch in einer Ansicht die beiden Matrizenseiten aus Figur 4a und Figur 4b übereinander angeordnet, mit einer zweiten Matrizenseite, die gegenüber der ersten Matrizenseite um eine X-Achse und eine Y-Achse versetzt ist;
- Figur 5a: schematisch in einer Ansicht eine erste Matrizenseiten mit Vertiefungen;
- Figur 5b: schematisch in einer Ansicht eine zweite Matrizenseite mit zu den Vertiefungen der ersten Matrizenseite aus Figur 5a korrespondierenden Vertiefungen;
- Figur 5c: schematisch in einer Ansicht die beiden Matrizenseiten aus Figur 5a und Figur 5b übereinander angeordnet, mit einer zweiten Matrizenseite, die gegenüber der ersten Matrizenseite um eine X-Achse und eine Y-Achse versetzt ist.

In einem ersten Schritt 1 werden die Partikel, hier Holzspäne, alternativ bspw. Holzfasern, bereitgestellt. Dabei kann optional zwischen Partikeln für die Stützstrukturen und Partikeln für die Deckschicht unterschieden werden, wobei die Partikel für die Deckschicht bspw. ein geringeres Volumen aufweisen gegenüber den Partikeln für die Stützstrukturen.

In einem zweiten Schritt 2 werden die Partikel mit einem Klebemittel und gegebenenfalls weiteren Zusatzstoffen, wie beispielsweise Wachs, benetzt. Dies erfolgt insbesondere in für die Holzwerkstoffproduktion üblichen Vorrichtungen.

In einem weiteren Verfahrensschritt 3 wird die erste Pressform bereitgestellt. Hierfür kann diese beispielsweise vorab gereinigt oder auch mit entsprechenden Trennmitteln benetzt werden. Nach dem Beleimen werden die Partikel auf die erste Pressform aufgebracht (Schritt 4), in diesem Fall mittels eines üblichen Streukopfes aufgestreut. Dies erfolgt in diesem Fall in zwei Durchgängen. In einem Durchgang werden zuerst grobe Partikel auf die Pressform und in die Vertiefungen eingestreut. Zur Erhöhung der Schüttdichte werden die auf der Pressform aufliegenden Partikel nochmals mittels einer Bürstenwalze in die Vertiefungen eingewischt (Schritt 5). Anschließend erfolgt eine Vorverdichtung der Partikel in den Vertiefungen durch Druckluft (Schritt 6), wobei beide Schritte optional sind. Die Vorverdichtung kann beispielsweise mittels einer Walze oder mehrerer Walzen durchgeführt werden, die vorzugsweise auf die Vertiefungen der ersten Pressform abgestimmte Erhebungen auf der Walzenoberfläche aufweist. Hierdurch können die Partikel direkt in den Vertiefungen verdichtet bzw. in die Vertiefungen eingepresst werden. Sollte mittels einer ebenfalls optional durchgeführten Kontrolluntersuchung festgestellt werden, dass die Vertiefungen nicht ausreichend mit Partikeln gefüllt sind, können nochmals Grobpartikel aufgetragen, eingewischt und gegebenenfalls vorverdichtet werden.

Nach dem Befüllen der Vertiefungen wird in einem weiteren Durchgang mit einer weiteren Streuvorrichtung die Deckschicht gestreut (Schritt 8). Die Deckschicht kann vollständig aus Feinpartikeln, d. h. Partikeln, die gegenüber den Grobpartikeln ein geringeres Volumen haben, ausgebildet werden. Alternativ kann die Deckschicht auch mehrere Lagen aufweisen, sodass beispielsweise direkt an die Vertiefungen eine weitere Lage Grobpartikel angrenzt und erst eine äußere Lage aus Feinpartikeln besteht. Bei der Verwendung von Fasern als Partikel sind die Partikel für die Vertiefungen und die Partikel für die Deckschicht häufig identisch.

Anschließend wird die Pressgutmatte aus den locker aufeinandergeschichteten Partikeln in einer Presse unter Einwirkung von Pressdruck vorverdichtet (Schritt 9). Auf die vorverdichtete Pressgutmatte, die weiterhin auf der ersten Pressform aufliegt, wird eine Oberflächenbeschichtung aufgelegt (Schritt 10). Die Oberflächenbeschichtung besteht hier aus einem Dekorpapier mit einem farblichen Dekoraufdruck und einem oberhalb des Dekorpapiers angeordneten Overlay. Das Overlay umfasst ebenfalls ein Overlaypapier. Sowohl das Dekorpapier als auch das Overlaypapier sind mit Kunstharz, hier Melaminharz, getränkt. Das Overlay ist optional und wird insbesondere bei Oberflächen, die besonders hohen Belastungen ausgesetzt sind, verwendet. Alternativ kann auch nur ein kunstharzgetränktes Dekorpapier verwendet werden.

Das so hergestellte Paket aus vorverdichteter Pressgutmatte und Melaminharz getränkten Oberflächenbeschichtungsfilmen wird in die Presse eingefahren und in der Presse unter Einwirkung von Wärme und Druck verpresst (Schritt 11). Dabei erfolgt zum einen eine weitere Verdichtung der Pressgutmatte auf ihre Enddicke, ein Verkleben der Partikel durch das Abbinden des Klebemittels und ein Verkleben der Oberflächenbeschichtung mit der äußeren Oberfläche der Streugutmatte mittels des Kunstharzes.

Anschließend wird die fertig gestellte, mit einer Oberflächenbeschichtung versehene Teilplatte aus der Presse herausgefahren, aus der Pressform entnommen und abgekühlt und gegebenenfalls nachbearbeitet. So können bspw. Formatschnitte o.ä. durchgeführt werden (Schritt 12). Für eine besonders einfache Entnahme der Teilplatte aus der ersten Pressform, kann die erste Pressform Löcher, beispielsweise Mikrolöcher zum Erzeugen eines Unterdrucks, gegebenenfalls eines Vakuums an der Pressgutmatte aufweisen und/oder zum Beaufschlagen der Teilplatte mit Druckluft ausgebildet sein, um die Entnahme aus der ersten Pressform zu vereinfachen und die Stützstrukturen zu schützen.

Zum Herstellen der Leichtbauplatte wird die oberflächenbeschichtete Teilplatte und eine Werkstoffplatte (bspw. eine zweite oberflächenbeschichtete Teilplatte) bereitgestellt (Schritt 13). Anschließend erfolgt ein Klebemittelauftrag auf die äußeren Enden der Stützstrukturen und/oder auf die Werkstoffplatte (Schritt 14). Als Klebemittel können verschiedene Kleber, die insbesondere drucklos abbinden, verwendet werden. Hier wird PVAC-Leim aufgetragen. Anschließend werden die Teilplatte und die Werkstoffplatte mit ihren Innenseiten aufeinandergelegt (Schritt 15) und miteinander zu einer Leichtbauplatte verklebt (Schritt 16). Der hierfür benötigte Pressdruck kann durch das Eigengewicht der Werkstoffplatte oder der Teilplatte erzeugt werden. Auch kann das Verkleben bspw. in einer Presse unter Einwirkung eines geringen, von den Stützstrukturen aufnehmbaren Pressdrucks erfolgen. Nach dem Fertigstellen der Leichtbauplatte kann diese Endbearbeitet, bspw. auf Maß zugeschnitten werden (Schritt 17).

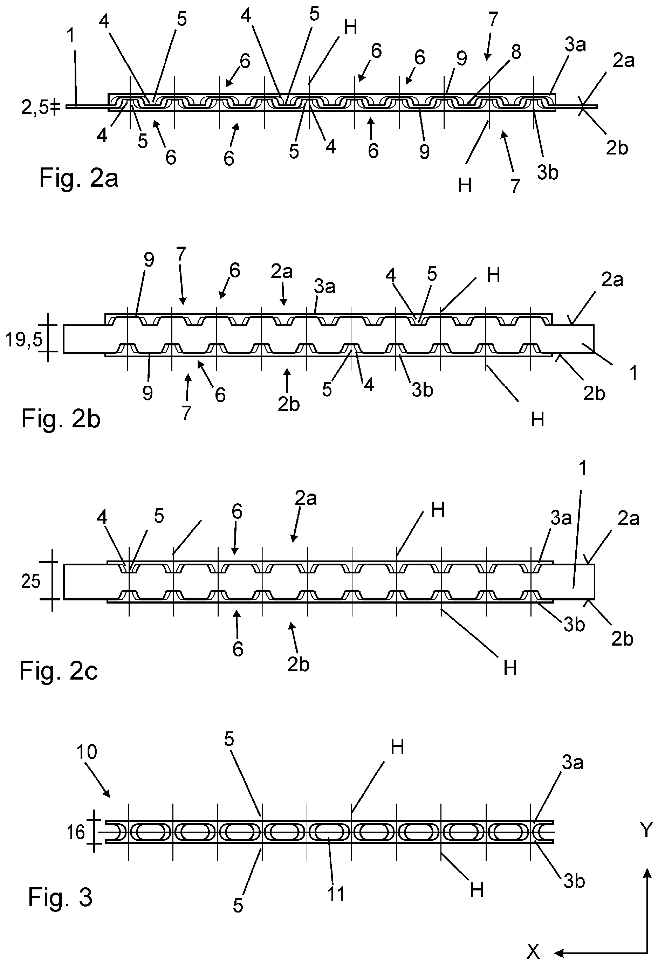

Die Figuren 2a bis 2c zeigen Pressmatrizen 1 mit unterschiedlicher Stärke. Auf der ersten Matrizenseite 2a ist eine obere Teilplatte 3a angeordnet, während auf der der ersten Matrizenseite 2a gegenüberliegenden zweiten Matrizenseite 2b eine untere Teilplatte 3b vorliegt.

Sowohl die obere Matrizenseite 2a als auch die untere Matrizenseite 2b weisen Vertiefungen 4 auf, in denen Stützstrukturen 5 aus dem Material der Teilplatten 3a, 3b ausgebildet sind. Die Vertiefungen 4 sind in einem regelmäßigen Rastermuster (hier durch Hilfsstriche H angedeutet) angelegt, aufgrund dessen die Vertiefungen 4 einen mittleren Abstand von hier 32 mm aufweisen. Die Teilplatten 3a, 3b sind als Faserplatten ausgebildet, können aber auch aus bspw. anderen organischen, miteinander verleimten Partikeln bestehen. Die Vertiefungen 4 der ersten Matrizenseite 2a sind korrespondierend zu den Vertiefungen 4 der zweiten Matrizenseite 2b ausgebildet, sodass die an den beiden Matrizenseiten 2a, 2b hergestellten Teilplatten 3a, 3b jeweils an ihren Stützstrukturen 5 miteinander verbindbar sind.

Bei der in Figur 2a dargestellten Pressmatrize 1 erstrecken sich die Vertiefungen 4 der ersten Matrizenseite 2a in einen Bereich 6 der zweiten Matrizenseite 2b in dem keine Vertiefungen 4 angeordnet sind. Umgekehrt erstrecken sich die Vertiefungen 4 der zweiten Matrizenseite 2a ebenfalls in einen Bereich 6 der ersten Matrizenseite 2a in dem keine Vertiefungen 4 vorliegen. Die dargestellte Pressmatrize 1 weist eine Stärke von ca. 2,5 mm auf. Die beiden Teilplatten 3a, 3b weisen eine Gesamtstärke von der Außenoberfläche 7 bis zum äußeren Ende 8 der Stützstruktur 5 von 8 mm auf, wobei der Deckschichtbereich 9 2,5 mm stark ist und die sich aus dem Deckschichtbereich 9 erhebenden Vertiefungen 4 bis zu ihrem äußeren Ende 8 dementsprechend 5,5 mm stark sind.

Bei der in Figur 2b dargestellten Pressmatrize 1 ist die Anordnung der Vertiefung 4 gegenüber der Pressmatrize 1 aus der Figur 2a identisch. Aufgrund ihrer größeren Stärke von ca. 19,5 mm liegen die jeweiligen Vertiefungen 4 einer Matrizenseite 2a, 2b jedoch nur Bereichen 6 der anderen Matrizenseite 2a, 2b gegenüber, in denen keine Vertiefungen 4 angeordnet sind, sie ragen jedoch nicht bis in diese Bereiche 6 hinein.

Bei der in der Figur 2c dargestellten Pressmatrize 1 ist die Ausbildung und Ausformung der Vertiefungen 4 und die Anordnung der Vertiefungen 4 je Matrizenseite 2a, 2b identisch zu den aus den Figuren 2a und 2b dargestellten Pressmatrizen 1. Im Unterschied zu den in den Figuren 2a und 2b dargestellten Pressmatrizen 1 ist jedoch die erste Matrizenseite 2a gegenüber der zweiten Matrizenseite 2b nicht um die X-Achse und Y-Achse versetzt, sondern die Vertiefungen 4 jeder Matrizenseite2a, 2b sind deckungsgleich an gegenüberliegenden Matrizenseiten 2a, 2b der Pressmatrize 1 angeordnet.

Bei den Abmessungen unterscheidet sich die Ausführungsformen aus den Figuren 2a und Figur 2b gegenüber der Ausführungsform aus Figur 2c ausschließlich bei der Pressmatrize 1, während die Abmessungen der Teilplatten 3a, 3b identisch zu den Abmessungen der Teilplatten 3a, 3b aus der Ausführungsform aus Figur 2a und 2b sind.

Figur 3 zeigt die beiden in den Figuren 2a bis 2c dargestellten Teilplatten 3a, 3b, die an ihren jeweiligen Stützstrukturen 5 miteinander verbunden, hier miteinander verklebt sind und eine Leichtbauplatte 10 ausbilden. Zwischen den miteinander verklebten Stützstrukturen 5, die sich als Erhebungen aus den Deckschichtbereichen 9 erstrecken, sind Hohlräume 11 ausgebildet, wodurch die Dichte der Leichtbauplatte 10 besonders gering ist. Die Gesamtstärke der Leichtbauplatte 10 beträgt 16 mm.

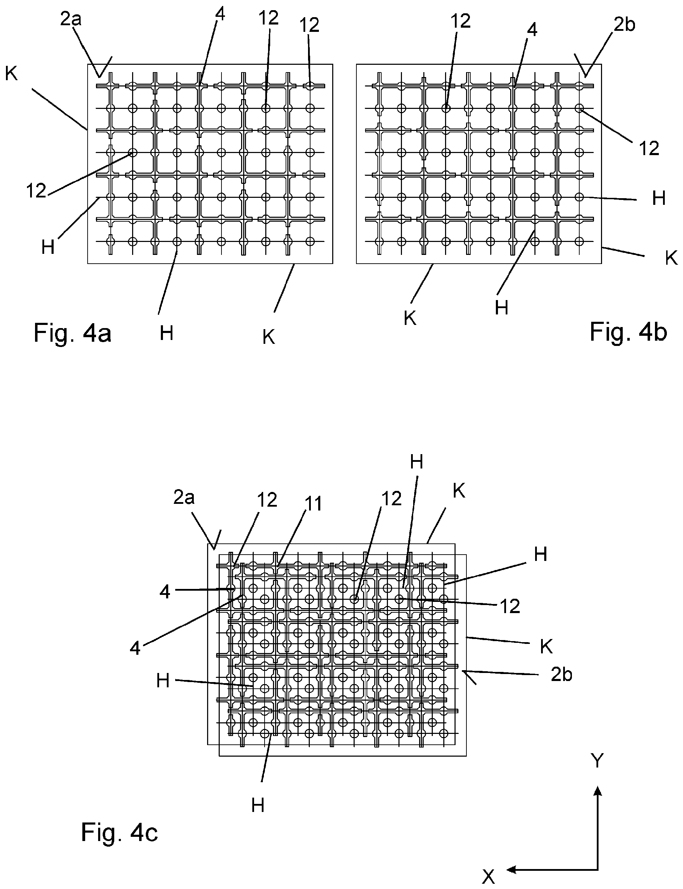

Die Figuren 4a und 4b zeigen eine erste und eine zweite Matrizenseite 2a, 2b einer Pressmatrize 1 mit Vertiefungen 4. Die in Figur 4a dargestellten Vertiefungen 4 erstrecken sich von der Darstellungsebene in Richtung des Betrachters, während die in Figur 4b dargestellten Vertiefungen 4 sich in Richtung vom Betrachter weg erstrecken. Die Vertiefungen 4 bilden ein regelmäßiges Rastermuster mit Quadraten aus Knotenpunkten 12 und Stegen 13 und einem in der Mitte jedes Quadrates angeordneten domartigen Knotenpunkt 12 aus. Gut erkennbar ist, dass zumindest die Knotenpunkte 12 der Vertiefungen 4 auf der ersten Matrizenseite 2a spiegelsymmetrisch zu den Knotenpunkten 12 der Vertiefungen 4 auf der zweiten Matrizenseite 2b angeordnet sind. Die jeweiligen Knotenpunkte 12 sind in einem 32 mm Abstandsraster (hier durch Hilfslinien H dargestellt) zueinander auf jeder Matrizenseite 2a, 2b angeordnet. Dabei sind die Knotenpunkte 12 (d.h. Teile der Vertiefung 4) der ersten Matrizenseite 2a korrespondierend zu den Kontenpunkten 12 der zweiten Matrizenseite 2b angeordnet, d. h, zu jedem einzelnen Knotenpunkt 12 der ersten Matrizenseite 2a, 2b liegt ein korrespondierender Knotenpunkt 12 an der zweiten Matrizenseite 2b vor. Zusätzlich sind eine Vielzahl der Stege 13 der ersten Matrizenseite 2a korrespondierend zu einer Vielzahl der Stege 13 der zweiten Matrizenseite 2b ausgebildet, so dass Teilplatten 3a, 3b, die mit einer Prägematrize 1 hergestellt werden, die diese beiden Matrizenseiten 2a, 2b aufweist, an allen Knotenpunkten 12 und einer Vielzahl an Stegen 13 miteinander verbunden werden können.

Figur 4c zeigt schematisch die beiden in Figur 4a und Figur 4b dargestellten Matrizenseiten 2a, 2b übereinander, wobei für ein besseres Verständnis nur die Vertiefungen 4, die äußeren Kanten K und die Hilfslinien H gezeigt werden. Die zweite Matrizenseite 2b (Figur 3b) ist hier über die erste Matrizenseite 2a gelegt dargestellt. Die beiden Matrizenseiten 2a, 2b sind dabei um einen halben Knotenabstand in X-Achsenrichtung und Y- Achsenrichtung versetzt angeordnet.

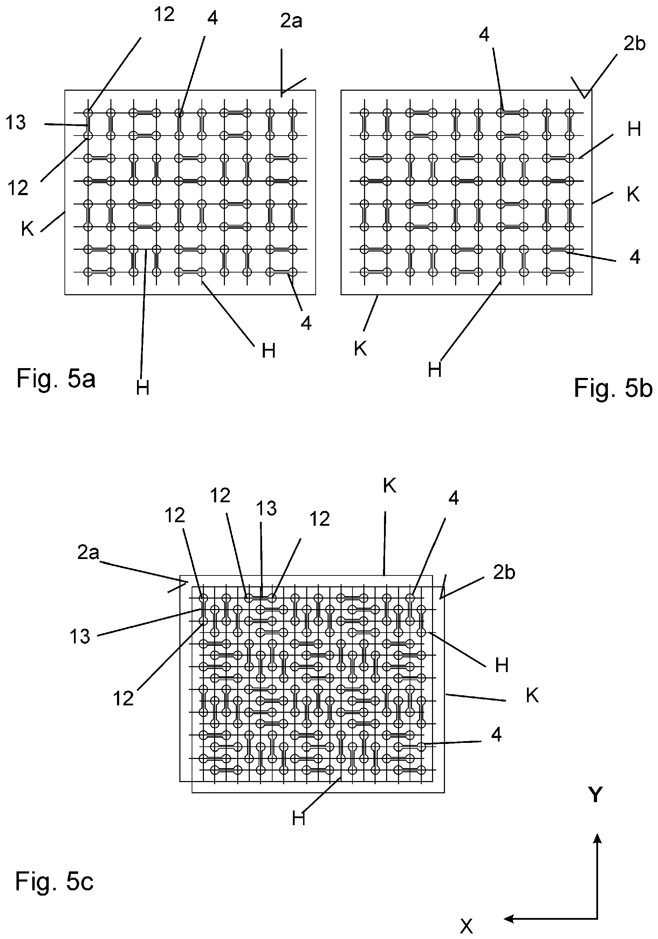

Die in den Figuren 5a bis 5c dargestellten Matrizenseiten 2a, 2b unterscheiden sich gegenüber den in Figur 4a bis Figur 4c dargestellten Matrizenseiten 2a, 2b, durch das durch die Vertiefungen 4 gebildete Rastermuster. Während die in den Figuren 4a bis 4c dargestellten Vertiefungen 4 weitestgehend Quadrate aus Stegen 13 mit Knotenpunkten 12 und einem in der Mitte jedes Quadrates angeordneten domartigen Knotenpunkt 12 bilden, sind die in den Figuren 5a bis 5c dargestellten Vertiefungen 4 als separate, hantelförmige Vertiefungen 4 ausgebildet, die jeweils einen Steg 13 mit außenseitigen Knotenpunkten 12 aufweisen. Auch hier liegt eine spiegelsymmetrische Anordnung der Vertiefungen 4 der ersten Matrizenseite 2a gegenüber den Vertiefungen 4 der zweiten Matrizenseite 2b vor, d. h. auch hier sind die Vertiefungen 4 der ersten Matrizenseite 2a korrespondierend zu den Vertiefungen 4 der zweiten Matrizenseite 2b angeordnet. Wie aus der Figur 5c ersichtlich, ist auch hier die zweite Matrizenseite 2b gegenüber der ersten Matrizenseite 2a um einen Abstand X sowohl in Richtung der X-Achse als auch in Richtung der Y-Achse versetzt. Dabei entspricht auch hier Abstand X sowohl in X-Achsenrichtung als auch Y-Achsenrichtung dem halben Abstand von zwei Knotenpunkte 12 einer Vertiefung 4.

Alle in den Figuren 2a bis 5a dargestellten Pressmatrizen 1 weisen zudem eine nicht dargestellte Mikroperforation auf, die eine Dampfdurchlässigkeit der Pressmatrize 1 herstellt.

Wie ausgeführt, sind die in den Figuren 2a 5c dargestellten Vertiefungen 4 und dementsprechend auch die daraus resultierenden Stützstrukturen 5 entsprechend einem regelmäßigen Raster (als Hilfslinien H dargestellt), angeordnet. In den Ausführungsbeispielen der Figuren 2a bis 5c beträgt der Rasterabstand zwischen den Knotenpunkten 12, d.h. auch zwischen den sich schneidenden Rasterlinien (Hilfslinie H) 32 mm. Grundsätzlich ist jedoch auch eine andere Rasterung, bspw. andere Rastermuster und/oder andere Rasterabstände oder auch eine unregelmäßige Anordnung der Vertiefungen 4 auf den Matrizenseiten 2a, 2b möglich. Dabei sind die Vertiefungen 4 auf den gegenüberliegenden Matrizenseiten 2a, 2b insbesondere korrespondierend und ggf. versetzt zueinander ausgebildet, so dass zumindest ein Großteil der entsprechend hergestellten Stützstrukturen 5 der Teilplatten 3a, 3b korrespondierend zueinander angeordnet und somit miteinander verbindbar ausgebildet ist.

### Bezugszeichenliste

- 1: Pressmatrize
- 2a: erste Matrizenseite
- 2b: zweite Matrizenseite
- 3a: Teilplatte
- 3b: Teilplatte
- 4: Vertiefungen
- 5: Stützstrukturen
- 6: Bereich
- 7: äußere Oberfläche
- 8: äußeren Ende der Stützstruktur
- 9: Deckschichtbereich
- 10: Leichtbauplatte
- 11: Hohlräume
- 12: Knotenpunkt
- 13: Steg

- H: Hilfslinien
- K: Kanten

## Patentansprüche

1. Verfahren zum Herstellen einer Leichtbauplatte (10) mit den Schritten:
- Erzeugen einer zu einer Teilplatte (3a, 3b) verpressbaren Pressgutmatte durch die Anordnung von beleimten Partikeln auf einer ersten Pressform,
- Verpressen der Pressgutmatte in einer Presse zu der Teilplatte (3a, 3b) mit Stützstrukturen (5) auf einer Plattenseite;
- Verbinden, insbesondere Verkleben der Stützstrukturen (5) mit einer Werkstoffplatte, wobei
- die Pressform Vertiefungen (4) zum Erzeugen von Stützstrukturen (5) auf einer Oberfläche der Teilplatte (3a, 3b) umfasst und beim Erzeugen der Pressgutmatte ein Teil der Partikel in die Vertiefungen (4) eingebracht wird;
wobei nach dem Aufbringen der Partikel diese zusätzlich eingewischt, eingekehrt oder auch eingebürstet und/oder über Luftströme in die Vertiefungen befördert werden.

2. Verfahren nach mindestens Anspruch 1, **dadurch gekennzeichnet, dass** die vollständig verpresste Pressgutmatte mit einem Verhältnis zwischen der Höhe der Stützstrukturen (5), ausgehend von einem Stützstrukturengrund bis zu einem freien Ende der Stützstrukturen, und der Dicke der Deckschicht, ausgehend von einer Außenoberfläche der Teilplatte bis zum freien Ende der Stützstrukturen, von mindestens 1:1, bevorzugt mindestens 1,5:1, besonders bevorzugt mindestens 2:1, und vorteilhafterweise mindestens zwischen 1:1 und 4:1 ausgebildet wird.

3. Verfahren nach mindestens einem der vorhergehenden Ansprüche, **dadurch gekennzeichnet, dass** eine Oberflächenbeschichtung auf einer der ersten Pressform gegenüberliegenden äußeren Oberfläche der Streugutmatte angeordnet wird.

4. Verfahren nach Anspruch 3, **dadurch gekennzeichnet, dass** beim Verpressen der Beschichtung ein Unterdruck an die Pressgutmatte angelegt und insbesondere beim Aushärten der Beschichtung entstehende Feuchtigkeit abgesaugt wird.

5. Verfahren nach mindestens einem der vorhergehenden Ansprüche, **dadurch gekennzeichnet, dass** als Werkstoffplatte eine zweite Teilplatte (3a, 3b) verwendet wird, wobei die beiden Teilplatten (3a, 3b) jeweils mit ihren Stützstrukturen (5) miteinander verbunden werden

6. Verfahren nach mindestens einem der vorhergehenden Ansprüche, **dadurch gekennzeichnet, dass** beim Verkleben der Stützstrukturen (5) Hohlräume (11) im Bereich der Stützstrukturen (5) verbleiben.

7. Verfahren nach mindestens einem der vorhergehenden Ansprüche, **dadurch gekennzeichnet, dass** Zwischenräume zwischen den Stützstrukturen (5) mit einem Leichtbauwerkstoff insbesondere einem Schaum ausgefüllt werden.

8. Verfahren nach Anspruch 1, wobei Teilplatten (3a, 3b) für
die Leichtbauplatte mit den folgenden Schritten hergestellt werden:
- Erzeugen einer zu einer Teilplatte (3a, 3b) verpressbaren ersten Pressgutmatte durch die Anordnung von beleimten Partikeln auf einer Unterlage,
- Anordnen einer Pressmatrize (1) auf der ersten Pressgutmatte,
- Erzeugen einer zu einer Teilplatte (3a, 3b) verpressbaren zweiten Pressgutmatte durch die Anordnung von beleimten Partikeln auf der Pressmatrize (1),
- Verpressen der Pressgutmatten in einer Presse zu zwei Teilplatten (3a, 3b),
**dadurch gekennzeichnet, dass**
- die Pressmatrize (1) auf zwei gegenüberliegenden Matrizenseiten (2a, 2b) Vertiefungen (4) umfasst,
- ein Teil der Partikel in die Vertiefungen (4) eingebracht wird, und
- mit dem Verpressen der Teilplatten (3a, 3b) Stützstrukturen (5) aus verpressten Partikeln an jeder der an die Matrizenseiten (2a, 2b) angrenzenden Oberflächen der Teilplatten (3a, 3b) erzeugt werden.

9. Verfahren nach Anspruch 8, **dadurch gekennzeichnet, dass** die Pressmatrize (1) nach dem Anordnen dieser auf der ersten Pressgutmatte und/oder nach dem Erzeugen der zweiten Pressgutmatte, in Schwingung gebracht wird, so dass die Partikel der ersten Pressgutmatte und/oder der zweiten Pressgutmatte in die angrenzenden Vertiefungen (4) der Pressmatrize (1) eindringen.

10. Verfahren nach Anspruch 8 oder Anspruch 9, **dadurch gekennzeichnet, dass** die den Stützstrukturen (5) gegenüberliegenden Außenoberflächen der Teilplatte (3a, 3b) beschichtet werden, wobei die Pressmatrize (1) beim Beschichten zwischen den Teilplatten (3a, 3b) angeordnet ist.

11. Verfahren nach einem der Ansprüche 8 bis 10, **dadurch gekennzeichnet, dass**
- die erste Pressgutmatte auf einer ersten Oberflächenbeschichtung erzeugt wird und
- dass auf der zweiten Pressgutmatte eine zweite Oberflächenbeschichtung angeordnet wird,
- wobei beide Oberflächenbeschichtungen beim Verpressen der Pressgutmatten mit den den Stützstrukturen (5) gegenüberliegen Seiten der entstehenden Teilplatten (3a, 3b) verbunden werden

## Claims

1. Method for manufacturing a lightweight panel (10) comprising the following steps:
- creating a pressing-material mat that can be pressed into a partial plate (3a, 3b) by arranging glued particles on a first pressing mold,
- pressing the pressing-material mat in a press to form the partial plate (3a, 3b) with support structures (5) on one side of the plate;
- connecting, in particular bonding, the support structures (5) to a material plate,
wherein
- the pressing mold comprises recesses (4) for creating support structures (5) on a surface of the partial plate (3a, 3b) and during the production of the pressing-material mat, a portion of the particles is introduced into the recesses (4);
wherein after the application of the particles, they are additionally wiped, swept in or brushed in and/or conveyed into the recesses via air currents.

2. Method according to at least claim 1, **characterised in that** the fully pressed pressing-material mat has a ratio between the height of the support structures (5), starting from a support structure base to a free end of the support structures, and the thickness of the top layer, starting from an outer surface of the partial plate to the free end of the support structures, of at least 1:1, preferably at least 1.5:1, particularly preferably at least 2:1, and advantageously at least between 1:1 and 4:1.

3. Method according to at least one of the preceding claims, **characterised in that** a surface coating is arranged on an outer surface of the spreading mat opposite the first pressing mold.

4. Method according to claim 3, **characterised in that** a vacuum is applied to the pressing-material mat during the pressing of the coating and in particular moisture produced during the curing of the coating is extracted.

5. Method according to at least one of the preceding claims, **characterised in that** a second partial plate (3a, 3b) is used as material plate, wherein the two partial plates (3a, 3b) are each connected to each other with their support structures (5).

6. Method according to at least one of the preceding claims, **characterised in that** when the support structures (5) are bonded, cavities (11) remain in the area of the support structures (5).

7. Method according to at least one of the preceding claims, **characterised in that** spaces between the support structures (5) are filled with a lightweight material, in particular a foam.

8. Method according to claim 1, wherein the partial plates (3a, 3b) for the lightweight panel are produced by the following steps:
- creating a first pressing-material mat that can be pressed into a partial plate (3a, 3b) by arranging glued particles on a substrate,
- arranging a pressing die (1) on the first pressing-material mat,
- creating a second pressing-material mat that can be pressed into a partial plate (3a, 3b) by arranging glued particles on the pressing die (1),
- pressing the pressing-material mats in a press to form two partial plates (3a, 3b),
**characterised in that**
- the pressing die (1) comprises recesses (4) on two opposite die sides (2a, 2b),
- a portion of the particles is introduced into the recesses (4), and
- by pressing the partial plates (3a, 3b), support structures (5) made of pressed particles are created on each of the surfaces of the partial plates (3a, 3b) adjacent to the die sides (2a, 2b).

9. Method according to claim 8, **characterised in that** the pressing die (1) is set into vibration after being arranged on the first pressing-material mat and/or after the second pressing-material mat has been produced, so that the particles of the first pressing-material mat and/or the second pressing-material mat penetrate into the adjacent recesses (4) of the pressing die (1).

10. Method according to claim 8 or claim 9, **characterised in that** the outer surfaces of the partial plate (3a, 3b) opposite the support structures (5) are coated, wherein the pressing die (1) is arranged between the partial plates (3a, 3b) during coating.

11. Method according to one of claims 8 to 10, **characterised in that**
- the first pressing-material mat is produced on a first surface coating and
- a second surface coating is arranged on the second pressing-material mat,
- wherein both surface coatings are bonded to the sides of the resulting partial plates (3a, 3b) opposite the support structures (5) during pressing of the pressing-material mats.

## Revendications

1. Procédé de fabrication d'un panneau léger (10) comprenant les étapes suivantes:
- la production d'un tapis de matériau de pressage pouvant être pressé en une plaque partielle (3a, 3b) par la disposition de particules collées sur un premier moule de pressage,
- le pressage du tapis de matériau de pressage dans une presse pour former la plaque partielle (3a, 3b) avec des structures de support (5) sur un côté de la plaque;
- l'assemblage, en particulier le collage, des structures de support (5) avec une plaque en matériau,
dans lequel
- le moule de pressage comprend des cavités (4) pour créer des structures de support (5) sur une surface de la plaque partielle (3a, 3b) et, lors de la production du tapis de matériau de pressage, une partie des particules est introduite dans les cavités (4);
dans lequel après l'application des particules, celles-ci sont en outre essuyées, balayées ou brossées et/ou transportées dans les cavités par des courants d'air.

2. Procédé selon au moins la revendication 1, **caractérisé en ce que** le tapis de matériau de pressage entièrement comprimé présente un rapport entre la hauteur des structures de support (5), à partir d'une base des structure de support jusqu'à une extrémité libre des structures de support, et l'épaisseur de la couche supérieure, à partir d'une surface extérieure de la plaque partielle jusqu'à l'extrémité libre des structures de support, d'au moins 1:1, de préférence d'au moins 1,5:1, particulièrement de préférence d'au moins 2:1, et avantageusement d'au moins 1:1 et 4:1.

3. Procédé selon au moins l'une des revendications précédentes, **caractérisée en ce qu'**un revêtement de surface est disposé sur une surface extérieure du tapis d'étalement opposée au premier moule de pressage.

4. Procédé selon la revendication 3, **caractérisé en ce qu'**un vide est appliqué au tapis de matériau de pressage pendant le pressage du revêtement, et en particulier, l'humidité générée pendant le durcissement du revêtement est extraite.

5. Procédé selon au moins l'une des revendications précédentes, **caractérisé en ce que** l'on utilise, comme plaque de matériau, une deuxième plaque partielle (3a, 3b), dans lequel les deux plaques partielles (3a, 3b) sont chacune reliées entre elles par leurs structures de support (5).

6. Procédé selon au moins l'une des revendications précédentes, **caractérisé en ce que**, lors du collage des structures de support (5), des cavités (11) restent dans la zone des structures de support (5).

7. Procédé selon au moins l'une des revendications précédentes, **caractérisé en ce que** les espaces entre les structures de support (5) sont remplis d'un matériau léger, en particulier une mousse.

8. Procédé selon la revendication 1, dans lequel les plaques partielles (3a, 3b) du panneau léger sont produites selon les étapes suivantes:
- la création d'un premier tapis de matériau de pressage pouvant être pressé en une plaque partielle (3a, 3b) par la disposition de particules collées sur un substrat,
- la disposition d'une matrice de pressage (1) sur le premier tapis de matériau de pressage,
- la création d'un deuxième tapis de matériau de pressage pouvant être pressé en une plaque partielle (3a, 3b) par la disposition de particules collées sur la matrice de pressage (1),
- le pressage des tapis de matériau de pressage dans une presse pour former deux plaques partielles (3a, 3b),
**caractérisé en ce que**
- la matrice de pressage (1) comprend des cavités (4) sur deux côtés opposés de la matrice (2a, 2b),
- une partie des particules est introduite dans les cavités (4), et
- le pressage des plaques partielles (3a, 3b) permet de créer des structures de support (5) à partir de particules pressées sur chacune des surfaces des plaques partielles (3a, 3b) adjacentes aux côtés de la matrice (2a, 2b).

9. Procédé selon la revendication 8, **caractérisé en ce que** la matrice de pressage (1) est mise en vibration après avoir été disposée sur le premier tapis de matériau de pressage et/ou après que le deuxième tapis de matériau de pressage a été produit, de sorte que les particules du premier tapis de matériau de pressage et/ou du deuxième tapis de matériau de pressage pénètrent dans les cavités adjacentes (4) de la matrice de pressage (1).

10. Procédé selon la revendication 8 ou 9, **caractérisé en ce que** les surfaces extérieures de la plaque partielle (3a, 3b) opposées aux structures de support (5) sont revêtues, dans lequel la matrice de pressage (1) est disposée entre les plaques partielles (3a, 3b) pendant le revêtement.

11. Procédé selon l'une des revendications 8 à 10, **caractérisé en ce que**
- le premier tapis de matériau de pressage est produit sur un premier revêtement de surface et
- un deuxième revêtement de surface est disposé sur le deuxième tapis de matériau de pressage,
- dans lequel les deux revêtements de surface sont reliés aux côtés des plaques partielles résultantes (3a, 3b) opposées aux structures de support (5) lors du pressage des tapis de matériau de pressage.
